# EUROPEAN PATENT SPECIFICATION

(11) **EP 4 238 227 B1**
(45) Date of publication and mention of the grant of the patent: **01.04.2026**
(21) Application number: 21840225.3
(22) Date of filing: 23.11.2021
(51) Int. Cl.: H04B 7/026, H04B 7/06, H04B 7/024, H04B 7/04

(54) **INTRA-USER EQUIPMENT-COORDINATION SET COMMUNICATION VIA AN ADAPTIVE PHASE-CHANGING DEVICE**
KOMMUNIKATION INNERHALB EINES BENUTZERAUSRÜSTUNGSKOORDINATIONSSATZES ÜBER EINE ADAPTIVE PHASENVERÄNDERNDE VORRICHTUNG
COMMUNICATION D'ENSEMBLE DE COORDINATION INTRA ÉQUIPEMENTS UTILISATEURS PAR L'INTERMÉDIAIRE D'UN DISPOSITIF À CHANGEMENT DE PHASE ADAPTATIF

(30) Priority: 09.12.2020 US 202063123211 P
(43) Date of publication of application: 06.09.2023
(73) Proprietor: Google LLC, Mountain View, CA 94043 (US)
(72) Inventor: WANG, Jibing, Mountain View, California 94043 (US); STAUFFER, Erik, Richard, Mountain View, California 94043 (US)
(74) Representative: Marks & Clerk GST
(86) International application number: PCT/US2021/060521
(87) International publication number: WO 2022/125306

(56) References cited:
- WO-A1-2020/139811
- CN-A- 111 050 277
- YASHUAI CAO ET AL: "Sum Rate Maximization for Reconfigurable Intelligent Surface Assisted Device-to-Device Communications", ARXIV.ORG, CORNELL UNIVERSITY LIBRARY, 201 OLIN LIBRARY CORNELL UNIVERSITY ITHACA, NY 14853, 10 January 2020 (2020-01-10), XP081576136
- BEIXIONG ZHENG ET AL: "Double-IRS Assisted Multi-User MIMO: Cooperative Passive Beamforming Design", ARXIV.ORG, CORNELL UNIVERSITY LIBRARY, 201 OLIN LIBRARY CORNELL UNIVERSITY ITHACA, NY 14853, 1 November 2020 (2020-11-01), XP081804632
- SAMAN ATAPATTU ET AL: "Reconfigurable Intelligent Surface assisted Two-Way Communications: Performance Analysis and Optimization", ARXIV.ORG, CORNELL UNIVERSITY LIBRARY, 201 OLIN LIBRARY CORNELL UNIVERSITY ITHACA, NY 14853, 22 January 2020 (2020-01-22), XP081583527

## Description

### BACKGROUND

The quality of a wireless connection between a base station and a user equipment (UE) often varies based on a number of factors, such as signal strength, bandwidth limitations, interfering signals, and so forth. A first UE operating at an edge of a cell coverage area, for example, typically receives a weaker signal from the base station relative to a second UE operating closer to the center of the cell coverage area. Thus, as the UE moves to different regions of the cell coverage area, the quality of service sometimes degrades.

Evolving wireless communication systems, such as fifth-generation (5G) technologies and sixth-generation (6G) technologies, use various techniques that increase data capacity relative to conventional wireless networks. As one example, 5G technologies transmit data using higher frequency ranges, such as the above-6 Gigahertz (GHz) band. As another example, the 5G technologies support multiple-input, multiple-output (MIMO) communications that use multiple transmission and/or reception paths. While these techniques can increase data capacity, transmitting and recovering information using these techniques also poses challenges. To illustrate, higher frequency signals and MIMO transmissions are more susceptible to multipath fading, which leads to recovery errors at a receiver. This can be further compounded as the UE moves to the varying locations within the cell coverage area. It therefore becomes desirable to correct for the signal distortions in order to obtain the anticipated performance benefits (e.g., increased data capacity).

'Sum Rate Maximization for Reconfigurable Intelligent Surface Assisted Device-to-Device Communications', Yashuai Cao *et al.* proposes to employ reconfigurable intelligent surfaces for enhancing the D2D underlaying system performance.

WO 2020/139811 A1 relates to a user equipment coordination set for a wireless network.

CN 111 050 277 A relates to a method and device for optimizing an intelligent reflecting surface (IRS)-assisted wireless communications system.

'Double-IRS Assisted Multi-User MIMO: Cooperative Passive Beamforming Design', Beixiong Zheng *et al.* relates to double-IRS assisted multi-user communication with cooperative passive beamforming designs that capture the multiplicative beamforming gain from the inter-IRS channel.

'Reconfigurable Intelligent Surface assisted Two-Way Communications: Performance Analysis and Optimization', Saman Atapattu *et al.* investigates the two-way communication between two users assisted by a re-configurable intelligent surface.

### SUMMARY

In accordance with the invention, there is provided: a method performed by a base station as recited by claim 1; a method performed by a coordinating user equipment as recited by claim 10; an apparatus as recited by claim 15.

This document describes techniques and apparatuses for intra-user equipment-coordination set (intra-UECS) communication via an adaptive phase-changing device (APD). In aspects, a base station selects an APD for use by a first user equipment-coordination set (UECS) in an intra-UECS communication path. The base station communicates APD information about the APD to a first coordinating user equipment (UE) of the first UECS. In aspects, the base station then apportions APD-access to the APD for the first UECS and indicates the apportioned APD-access to the first coordinating UE of the first UECS.

In aspects, a UE analyzes intra-UECS communications between user equipments (UEs) included in a UECS. Based on analyzing the intra-UECS communications, the UE identifies a condition that indicates to utilize an APD in one or more intra-UECS communication paths between the UEs included in the UECS. In aspects, the UE obtains apportioned APD-access to the APD from a base station and selects a surface configuration for the APD based on the apportioned APD-access. The UE then directs the APD to configure a surface of the APD using the surface configuration and directs the UEs included in the UECS to include the APD in the one or more intra-UECS communication paths.

The details of one or more implementations for intra-UECS communication via an APD are set forth in the accompanying drawings and the following description. Other features and advantages will be apparent from the description, the drawings, and the claims. This summary is provided to introduce subject matter that is further described in the Detailed Description and Drawings. Accordingly, this summary should not be considered to describe essential features nor used to limit the scope of the claimed subject matter.

### BRIEF DESCRIPTION OF THE DRAWINGS

The details of one or more aspects for intra-user equipment-coordination set (intra-UECS) communication via an adaptive phase-changing device (APD) are described with reference to the following drawings. The same numbers are used throughout the drawings to reference like features and components:
FIG. 1 illustrates an example operating environment in which various aspects of intra-UECS communication via an APD can be implemented;
FIG. 2 illustrates an example device diagram of entities that can implement various aspects of intra-UECS communication via an APD;
FIG. 3 illustrates an example device diagram of an APD that can be used in accordance with one or more aspects of intra-UECS communication via an APD;
FIG. 4 illustrates an example environment in which a base station and multiple UEs coordinate access to an APD in accordance with various aspects of intra-UECS communication via an APD;
FIG. 5 illustrates an example environment in which a base station or a coordinating UE of a UECS configures an APD in accordance with various aspects of intra-UECS communication via an APD;
FIG. 6 illustrates an example transaction diagram between various network entities in accordance with various aspects of intra-UECS communication via an APD;
FIG. 7 continues from FIG. 6 and illustrates an example transaction diagram in which a coordinating UE of a UECS controls a surface configuration of an APD in accordance with various aspects of intra-UECS communication via an APD;
FIG. 8 continues from FIG. 6 and illustrates an example transaction diagram in which a base station controls a surface configuration of an APD on behalf of a UECS in accordance with various aspects of intra-UECS communication via an APD;
FIG. 9 illustrates an example transaction diagram between a base station and multiple UECSs in accordance with various aspects of intra-UECS communication via an APD;
FIG. 10 continues from FIG. 9 and illustrates an example transaction diagram in which a base station apportions and assigns APD-access to multiple UECSs in accordance with various aspects of intra-UECS communication via an APD;
FIG. 11 continues from FIG. 9 and illustrates an example transaction diagram in which coordinating UEs of multiple UECSs negotiate APD-access in accordance with various aspects of intra-UECS communication via an APD;
FIG. 12 illustrates an example method that implements various aspects of intra-UECS communication via an APD; and
FIG. 13 illustrates an example method that implements various aspects of intra-UECS communication via an APD.

### DETAILED DESCRIPTION

In wireless communication systems, various factors affect the signal quality of wireless signals exchanged between a base station and a user equipment (UE) which may impact the services that the base station provides to the UE. For example, a location or orientation of the UE may affect received signal strength. To improve the signal quality, various aspects configure and/or establish a user equipment-coordination set (UECS) to perform joint processing (e.g., joint transmission, joint reception) of communications for a target UE. Altematively or additionally, to provide high bandwidth between the UEs included in the UECS, the UEs exchange intra-UECS communications using high-frequency transmissions.

Generally, a UECS includes at least two UEs that communicate through a local wireless connection and/or side link (e.g., direct communication between two devices without going through a base station) to share or distribute signal-related information for downlink and/or uplink UECS joint communications to a base station or other wireless network element. By having multiple UEs form a UECS for joint transmission and/or reception of control-plane information and/or user-plane data for a target UE within the UECS, the UEs in the UECS coordinate in a manner similar to a distributed antenna to improve the effective signal quality between the target UE and the base station. Downlink transmissions intended for the target UE can be transmitted to the UECS and received by the multiple UEs in the UECS. Each of the UEs demodulates and samples the downlink data as part of joint reception and then uses a local wireless connection to forward the samples to a single coordinating UE in the UECS for decoding and then forwarding to the target UE. In addition, uplink data generated by the target UE can be distributed using the local wireless connection to the multiple UEs in the UECS for joint transmission to the base station. Coordinating joint transmission and joint reception of data intended for the target UE significantly increases the target UE's effective transmission power and/or received power, thus improving the effective signal quality.

Coordinating the joint transmissions and/or joint receptions between the UEs included in the UECS may necessitate high-bandwidth intra-UECS communications. In aspects, the UEs transmit intra-UECS communications at higher frequencies (e.g., millimeter wave range), such as those used by fifth-generation (5G) or sixth-generation (6G) communication systems. As one example, a 5G base station allocates higher-frequency air interface resources to the UECS for the intra-UECS communications, and a coordinating UE of the UECS apportions the air interface resources to the UEs within the UECS for side-link communications (e.g., the intra-UECS communications). While the higher frequencies provide higher data throughput for the side-link communications, channel conditions can negatively impact these techniques. As an example, mmWave signals have high throughput under Line of Sight (LoS) conditions, but reflections create multi-path and frequency-selective fading that may increase recovery errors at the receiver. Because the LoS conditions may be difficult to achieve with moving UEs, this may also reduce a number of candidate UEs available to include in the UECS. To illustrate, UEs moving to different locations can introduce channel impairments, such as by moving to a location with an obstruction (e.g., a tree, a building, glass, fabric) that blocks LoS transmissions between UEs.

Adaptive phase-changing devices (APDs) include a Reconfigurable Intelligent Surface (RIS) that, when properly configured, modifies propagating signals to correct for, or reduce, errors introduced by communication path(s), such as small scale fading and fading MIMO channels. Generally, an RIS includes configurable surface materials that shape how incident signals striking the surface of the materials are transformed. To illustrate, the configuration of the surface materials can affect the phase, amplitude, and/or polarization of the transformed signal as well as its reflected beam direction and reflected beamwidth.

In aspects of intra-UECS communication via an APD, the UEs within a UECS include an APD in side-link communication paths to improve a signal quality of side-link communications exchanged between the UEs. As one example, a base station communicating with the UECS apportions access to an APD (e.g., reflection-access that corresponds to using a surface of the APD, control-access that corresponds to communicating directly with the APD), such as through time partitioning and/or configurable-surface-element partitioning, and indicates the apportioned access to a coordinating UE of a UECS. The coordinating UE then directs one or more UEs within the UECS to include the APD in side-link communication paths based on the apportioned access. Using the APD improves a signal quality of intra-UECS communications exchanged between the UE(s), which results in performance benefits (e.g., improved signal quality, increased data capacity) without necessitating LoS between the UEs.

While features and concepts of the described systems and methods for intra-UECS communication via an APD can be implemented in any number of different environments, systems, devices, and/or various configurations, various aspects of intra-UECS communication via an APD are described in the context of the following example devices, systems, and configurations.

### Example Environment

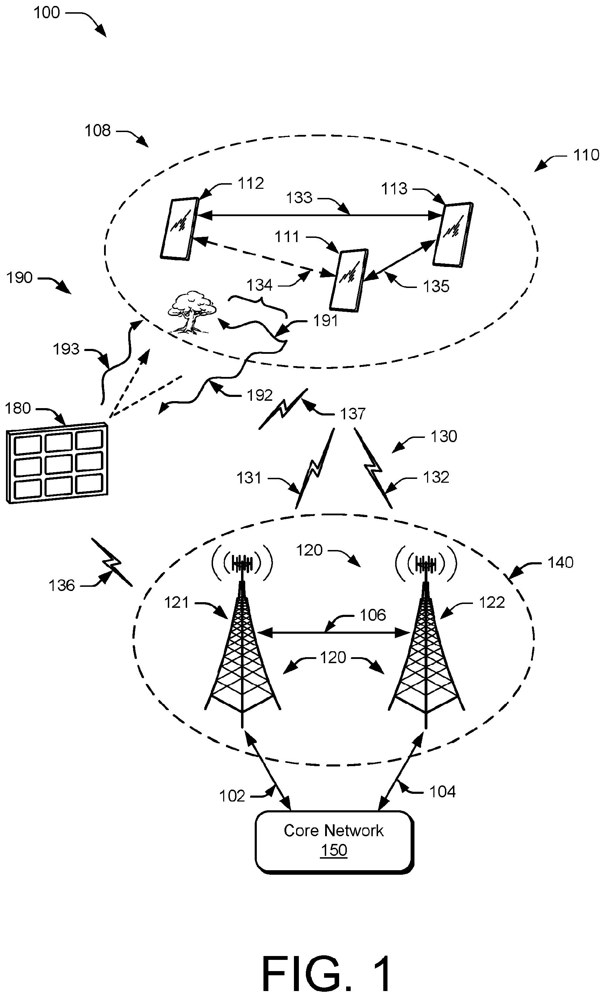

FIG. 1 illustrates an example environment 100, which includes multiple user equipment 110 (UE 110), illustrated as UE 111, UE 112, and UE 113. Each UE can communicate with base stations 120 (illustrated as base stations 121 and 122) through one or more wireless communication links 130 (wireless link 130), illustrated as wireless links 131 and 132. Each UE 110 in a UECS 108 (illustrated as UE 111, UE 112, and UE 113) can communicate with a coordinating UE of the UECS and/or a target UE in the UECS through a side link, such as one or more local wireless connections (e.g., WLAN, Bluetooth, NFC, a personal area network (PAN), WiFi-Direct, IEEE 802.15.4, ZigBee, Thread, millimeter-wavelength communication (mmWave), or the like) illustrated as wireless links 133, 134, and 135. Alternatively or additionally, each UE 110 can communicate using air interface resources allocated by the base station 120 for side link communications (e.g., air interface resources allocated for intra-UECS communications). For simplicity, the UE 110 is implemented as a smartphone but may be implemented as any suitable computing or electronic device, such as a mobile communication device, modem, cellular phone, gaming device, navigation device, media device, laptop computer, desktop computer, tablet computer, smart appliance, vehicle-based communication system, or an Internet-of-Things (IoT) device, such as a sensor, relay, or actuator. The base stations 120 (e.g., an Evolved Universal Terrestrial Radio Access Network Node B, E-UTRAN Node B, evolved Node B, eNodeB, eNB, Next Generation Node B, gNode B, gNB, ng-eNB, or the like) may be implemented in a macrocell, microcell, small cell, picocell, distributed base stations, or the like, or any combination thereof.

One or more base stations 120 communicate with the user equipment 110 using the wireless links 131 and 132, which may be implemented as any suitable type of wireless link. The wireless links 131 and 132 include control-plane information and/or user-plane data, such as downlink user-plane data and control-plane information communicated from the base stations 120 to the user equipments 110, uplink of other user-plane data and control-plane information communicated from the user equipments 110 to the base stations 120, or both. The wireless links 130 may include one or more wireless links (e.g., radio links) or bearers implemented using any suitable communication protocol or standard, or combination of communication protocols or standards, such as 3rd Generation Partnership Project Long-Term Evolution (3GPP LTE), fifth-generation New Radio (5G NR), sixth-generation (6G), and so forth. Multiple wireless links 130 may be aggregated in a carrier aggregation or multi-connectivity technology to provide a higher data rate for the UE 110. Multiple wireless links 130 from multiple base stations 120 may be configured for Coordinated Multipoint (CoMP) communication with the UE 110.

In aspects, the wireless links 130 include wireless link 136 between at least one of the base stations 120 (e.g., base station 121) and an adaptive phase-changing device 180 (APD 180) to control a surface configuration of the APD 180. The base stations 120 can also include a wireline interface for communicating control information with the APD 180. Alternatively or additionally, the wireless links 130 include wireless link 137 between a coordinating UE (e.g., the UE 111) of the UECS 108 and the APD 180 to control the surface configuration of the APD 180.

In some implementations, the intra-UECS wireless links (e.g., wireless link 133, wireless link 134, and/or wireless link 135) utilize wireless signals and an intermediate device (e.g., APD 180) that reflects or transforms ray(s) 190 of the wireless signals, illustrated as signal ray 191, signal ray 192, and signal ray 193. The signal ray 191 and signal ray 192 correspond to rays of a wireless signal used to implement the wireless link 134. In the environment 100, the signal rays 191 and 192 correspond to rays of a wireless signal from a coordinating UE (e.g., the UE 111) to another UE participating in the UECS 108. Reflected rays can alternatively or additionally correspond to a wireless signal from the UE participating in the UECS 108 to the coordinating UE. A first ray of the wireless signal (e.g., the signal ray 191) propagates toward the UE 112 in a line-of-sight (LoS) manner, and a second ray of the wireless signal (e.g., the signal ray 192) propagates toward the APD 180. The signal ray 192 strikes the surface of the APD 180 and transforms into signal ray 193 that propagates toward the UE 112. In aspects, the signal ray 192 strikes the surface of an RIS of the APD 180, which steers the reflected signal rays (e.g., signal ray 193) toward the UE 112. In the environment 100, foliage blocks the LoS signal ray 191 from reaching the UE 112, but other types of obstructions can dynamically block or attenuate the rays, such as vehicles, human bodies, water vapor, walls, or other materials.

The base station 120 and/or a coordinating UE (e.g., UE 111) can configure an RIS of the APD 180 to direct how the RIS alters signal properties (e.g., direction, phase, amplitude, polarization) of a wireless signal. As one example, the base station 121 communicates RIS surface-configuration information to the APD 180 using the wireless link 136, which may include an adaptive phase-changing device slow-control channel (APD-slow-control channel) or an adaptive phase-changing device fast-control channel (APD-fast-control channel). As another example, the UE 111, acting as the coordinating UE, communicates RIS surface-configuration information to the APD 180 using the wireless link 137 that can include an APD-slow-control channel and/or an APD-fast-control channel. In some aspects, the UE 111 communicates RIS surface-configuration information to the base station 121, and the base station 121 configures the surface of the APD using the RIS surface-configuration information from the UE 111.

In various implementations of intra-UECS communication via an APD and handover, a coordinating UE (e.g., the UE 111) and/or base station (e.g., the base station 121) selects surface configuration(s) for the APD 180 to direct or steer reflections of wireless signals transmitted between UEs participating in a UECS (e.g., intra-UECS communications between UE 111 and UE 112, UE 112 and UE 113, and/or UE 111 and UE 113). Alternatively or additionally, the coordinating UE and/or the base station select surface configuration(s) for the APD 180 based on signal-quality measurements, link-quality measurements, location information, historical data records, and so forth. In some aspects, the coordinating UE selects a second surface configuration using a first (proposed) surface configuration received from the base station as further described.

The base stations 120 are collectively a Radio Access Network 140 (e.g., RAN, Evolved Universal Terrestrial Radio Access Network, E-UTRAN, 5G NR RAN or NR RAN). The base stations 121 and 122 in the RAN 140 are connected to a core network 150. The base stations 121 and 122 connect, at 102 and 104 respectively, to the core network 150 through an NG2 interface for control-plane signaling and using an NG3 interface for user-plane data communications when connecting to a 5G core network, or using an S1 interface for control-plane signaling and user-plane data communications when connecting to an Evolved Packet Core (EPC) network. The base stations 121 and 122 can communicate using an Xn Application Protocol (XnAP) through an Xn interface or using an X2 Application Protocol (X2AP) through an X2 interface, at 106, to exchange user-plane data and/or control-plane information. The user equipment 110 may connect, via the core network 150, to public networks (e.g., the Internet) to interact with a remote service (not illustrated).

### Example Devices

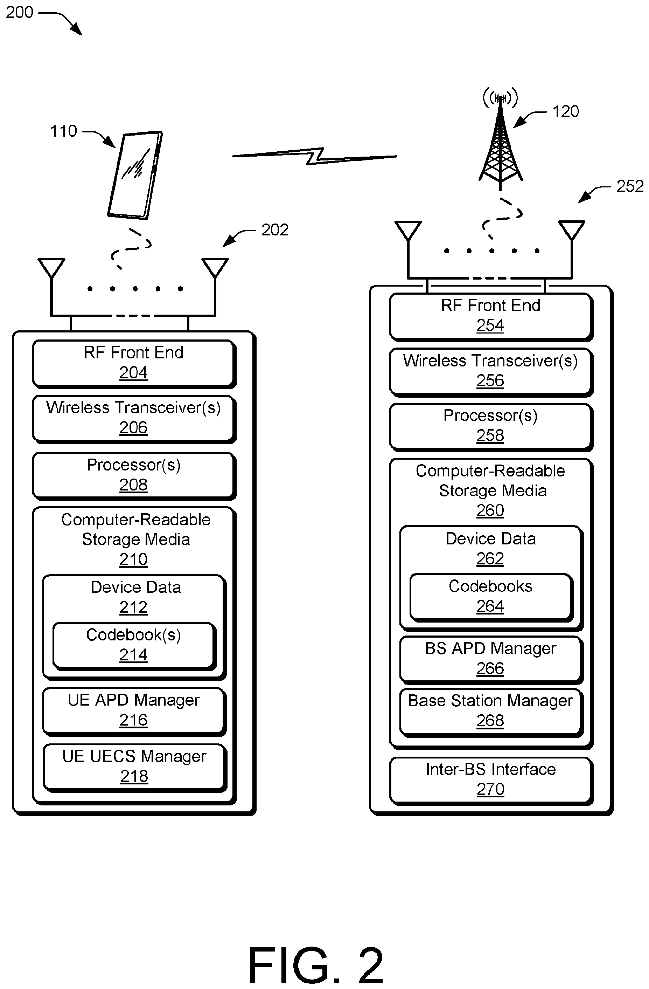

FIG. 2 illustrates an example device diagram 200 of the user equipment 110 and base stations 120. Generally, the device diagram 200 describes network entities that can implement various aspects of intra-UECS communication via an APD. FIG. 2 shows respective instances of the UE 110 and the base station 120. The UE 110 or the base station 120 may include additional functions and interfaces that are omitted from FIG. 2 for the sake of visual brevity. The UE 110 includes antennas 202, a radio frequency front end 204 (RF front end 204), and one or more wireless transceivers 206 (e.g., radio-frequency transceivers), such as any combination of an LTE transceiver, a 5G NR transceiver, and/or a 6G transceiver for communicating with base station 120 in the RAN 140 and/or other UEs included in the UECS 108. The RF front end 204 of the UE 110 can couple or connect the wireless transceivers 206 to the antennas 202 to facilitate various types of wireless communication.

The antennas 202 of the UE 110 may include an array of multiple antennas that are configured in a manner similar to or different from each other. The antennas 202 and the RF front end 204 can be tuned to, and/or be tunable to, one or more frequency bands defined by communication standards (e.g., 3GPP LTE, 5G NR) and implemented by the wireless transceiver(s) 206. Additionally, the antennas 202, the RF front end 204, and/or the wireless transceiver(s) 206 may be configured to support beam-sweeping for the transmission and reception of communications with the base stations 120. By way of example and not limitation, the antennas 202 and the RF front end 204 can be implemented for operation in sub-gigahertz bands, sub-6 GHz bands, and/or above 6 GHz bands that are defined by the 3GPP LTE and 5G NR communication standards (e.g., 57-64 GHz, 28 GHz, 38 GHz, 71 GHz, 81 GHz, or 92 GHz bands).

The UE 110 also includes processor(s) 208 and computer-readable storage media 210 (CRM 210). The processor 208 may be a single-core processor or a multiple-core processor implemented with a homogenous or heterogeneous core structure. The computer-readable storage media described herein excludes propagating signals. CRM 210 may include any suitable memory or storage device such as random-access memory (RAM), static RAM (SRAM), dynamic RAM (DRAM), non-volatile RAM (NVRAM), read-only memory (ROM), or Flash memory useable to store device data 212 of the UE 110. The device data 212 includes any combination of user data, multimedia data, applications, and/or an operating system of the UE 110. In aspects, the device data 212 optionally includes one or more codebook(s) 214. The codebooks 214 may include any suitable type or combination of codebooks, including surface-configuration codebooks that store surface-configuration information for a RIS of an APD and beam-sweeping codebooks that store patterns, sequences, or timing information for implementing multiple surface-configurations useful to direct an APD to perform a variety of reflective beamforming. In some aspects, the surface-configuration codebooks and beam-sweeping codebooks include phase-vector information, angular information (e.g., calibrated to respective phase vectors), and/or beam-configuration information. In implementations, the device data 212 stores processor-executable instructions that are executable by the processor(s) 208 to enable user-plane communication, control-plane signaling, and user interaction with the UE 110.

The CRM 210 may optionally include a user equipment adaptive phase-changing device manager 216 (UE APD manager 216). Alternatively or additionally, the UE APD manager 216 may be implemented in whole or part as hardware logic or circuitry integrated with, or separate from, other components of the UE 110. In aspects, the UE APD manager 216 of the UE 110 analyzes link-quality measurements, measurement reports, and/or other values and identifies a condition (e.g., a link-quality measurement indicates a channel impairiment, a UE-location associated with a history of channel impairements and/or APD-usage) that indicates to utilize an APD in one or more intra-UECS communication paths between UEs participating in a UECS (e.g., UECS 108). In aspects, the UE APD manager 216 identifies APDs near the UE 110 and identifies conditions (e.g., channel impairments, UE locations) that indicate when to utilize the APD(s) in intra-UECS communication paths. Alternatively or additionally, the UE APD manager 216 determines, based on identifying the condition, to request a reconfiguration of a (RIS) surface of a current APD utilized in an intra-UECS communication path. The UE APD manager 216 then directs the UE 110 to send a request to utilize an APD to the base station 120, indicate candidate APDs to the base station 120, indicate a surface (re)configuration to the APD 180, and/or indicate the surface (re)configuration to the base station 120 as further described.

The CRM 210 may optionally include a user-equipment-coordination set manager 218 (UECS manager 218). Alternatively or additionally, the UECS manager 218 may be implemented in whole or part as hardware logic or circuitry integrated with or separate from other components of the UE 110. In aspects, the UECS manager 218 provides the UE 110 to participate in a UECS, such as by directing the UE 110 to perform joint transmission and/or joint reception. The UECS manager 218 directs the UE 110 to forward In-phase/Quadrature (I/Q) samples over a side link to a coordinating UE of a UECS when the UE 110 acts as a non-coordinating UE. Alternatively or additionally, the UECS manager 218 receives and processes (e.g., combines, demodulates) samples from UEs participating in the UECS when the UE 110 acts as a coordinating UE and forwards the processed samples to a target UE over a side link.

The device diagram for the base station 120, shown in FIG. 2, includes a single network node (e.g., a gNode B). The functionality of the base station 120 may be distributed across multiple network nodes or devices and may be distributed in any fashion suitable to perform the functions described herein. The base station 120 includes antennas 252, a radio frequency front end 254 (RF front end 254), one or more wireless transceiver(s) 256 (e.g., radio-frequency transceivers) for communicating with the UE 110, such as LTE transceivers, 5G NR transceivers, and/or 6G transceivers. The RF front end 254 of the base stations 120 can couple or connect the wireless transceivers 256 to the antennas 252 to facilitate various types of wireless communication. The antennas 252 of the base station 120 may include an array of multiple antennas that are configured in a manner similar to or different from each other. The antennas 252 and the RF front end 254 can be tuned to, and/or be tunable to, one or more frequency bands defined by communication standards (e.g., 3GPP LTE, 5G NR) and implemented by the wireless transceivers 256. Additionally, the antennas 252, the RF front end 254, and/or the wireless transceivers 256 may be configured to support beamforming, such as Massive-MIMO, for the transmission and reception of communications with the UE 110.

The base station 120 also includes processor(s) 258 and computer-readable storage media 260 (CRM 260). The processor 258 may be a single-core processor or a multiple-core processor composed of a variety of materials, such as silicon, polysilicon, high-K dielectric, copper, and so on. CRM 260 may include any suitable memory or storage device such as RAM, SRAM, DRAM, NVRAM, ROM, or Flash memory useable to store device data 262 of the base stations 120. The device data 262 includes network-scheduling data, radio resource-management data, applications, and/or an operating system of the base stations 120, which are executable by processor(s) 258 to enable communication with the UE 110. The device data 262 also includes codebooks 264. The codebooks 264 may include any suitable type or combination of codebooks, including surface-configuration codebooks that store surface-configuration information for a RIS of an APD and beam-sweeping codebooks that store patterns, sequences, or timing information for implementing multiple surface-configurations useful to direct an APD to perform a variety of reflective beamforming. In some aspects, the surface-configuration codebooks and beam-sweeping codebooks include phase-vector information, angular information (e.g., calibrated to respective phase vectors), and/or beam-configuration information.

In aspects, the CRM 260 of the base station 120 also includes a base station-adaptive phase-changing device manager 266 (BS APD manager 266) for managing APD usage in intra-UECS communication path(s) with the UEs included in the UECS 108 and/or APD usage between the base station and one or more UEs included in the UECS 108. Alternatively or additionally, the BS APD manager 266 may be implemented in whole or part as hardware logic or circuitry integrated with or separate from other components of the base station 120. In aspects, the BS APD manager 266 identifies APDs near the UE 110 that can be used in intra-UECS communication paths. The BS APD manager 266 also selects surface configurations for the APD (e.g., RIS configurations), such as initial surface configurations and/or surface reconfigurations based on link-quality measurements, measurement reports, and/or other values as further described. In some implementations, the BS APD manager 266 receives a request from a coordinating UE of a UECS (e.g., the UE 110) for APD-access to an APD and assigns a portion of the APD-access to the UECS, such as apportioning reflection-access for using a surface of an APD and/or control-access for communicating directly with the APD. This can include apportioning APD-access between the base station 120 and the UECS and/or apportioning the APD-access between a first UECS and a second UECS as further described. Generally, apportioning the APD-access corresponds to dividing access to the APD (e.g., dividing reflection-access , dividing control-access) and assigning the divided APD-access to one or more entities. This may include assigning some of the divided access to a first entity and reserving some of the divided access for future use.

The CRM 260 also includes a base station manager 268 for managing various functionalities and communication interfaces of the base stations 120. Alternatively or additionally, the base station manager 268 may be implemented in whole or part as hardware logic or circuitry integrated with or separate from other components of the base stations 120. In at least some aspects, the base station manager 268 configures the antennas 252, RF front end 254, and wireless transceivers 256 for communication with the UE 110, the APD 180, and/or communication with a core network. The base station 120 includes an inter-base-station interface 270, such as an Xn and/or X2 interface, which the base station manager 268 configures to exchange user-plane and control-plane data between another base station 120, to manage the communication of the base stations 120 with the UE 110. The base station 120 also includes a core network interface (not shown) that the base station manager 268 configures to exchange user-plane data and control-plane information with core network functions and/or entities.

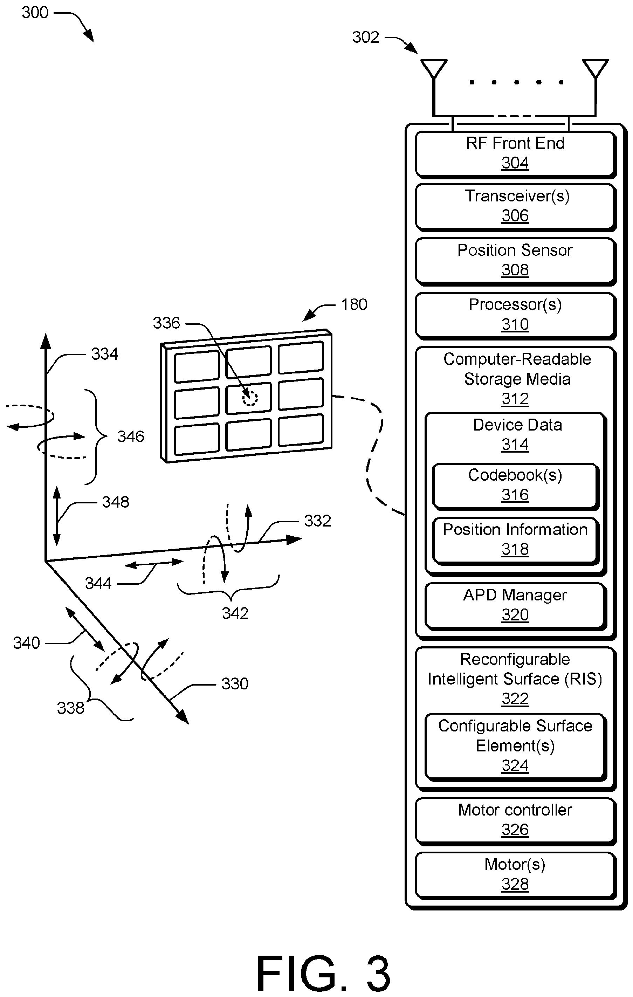

FIG. 3 illustrates an example device diagram 300 of the APD 180. Generally, the device diagram 300 describes an example entity with which various aspects of intra-UECS communication via an APD can be implemented but may include additional functions and interfaces that are omitted from FIG. 3 for the sake of visual clarity. The adaptive phase-changing device (APD) 180 is an apparatus that includes a Reconfigurable Intelligent Surface (RIS) 322, and components for controlling the RIS 322 (e.g., by modifying the surface configuration of the RIS), as further described below. In some implementations, the APD 180 may also include components for modifying the position of the APD 180 itself, which in turn modifies the position of the RIS 322. The APD 180 includes one or more antenna(s) 302, a radio frequency front end 304 (RF front end 304), and one or more wireless transceivers 306 (e.g., radio-frequency transceivers) for wirelessly communicating with the base station 120 and/or the UE 110. The APD 180 can also include a position sensor, such as a GNSS module, that provides position information based on a location of the APD 180.

The antenna(s) 302 of the APD 180 may include an array of multiple antennas that are configured in a manner similar to or different from each other. Additionally, the antennas 302, the RF front end 304, and the transceiver(s) 306 may be configured to support beamforming for the transmission and reception of communications with the base stations 120 and/or the UE 110. By way of example and not limitation, the antennas 302 and the RF front end 304 can be implemented for operation in sub-gigahertz bands, sub-6 GHz bands, and/or above 6 GHz bands. Thus, the antenna 302, the RF front end 304, and the transceiver(s) 306 provide the APD 180 with an ability to receive and/or transmit communications with the base station 120 and/or the UE 110, such as information transmitted using APD-control channels (e.g., an APD-slow-control channel or APD-fast-control channel) as further described.

The APD 180 includes processor(s) 310 and computer-readable storage media 312 (CRM 312). The processor 310 may be a single-core processor or a multiple-core processor implemented with a homogenous or heterogeneous core-structure. The computer-readable storage media described herein excludes propagating signals. CRM 312 may include any suitable memory or storage device such as RAM, SRAM, DRAM, NVRAM, ROM, or Flash memory useable to store device data 314 of the APD 180. The device data 314 includes user data, multimedia data, applications, and/or an operating system of the APD 180, which are executable by processor(s) 310 to enable dynamic configuration of the APD 180 as further described. The device data 314 also includes one or more codebooks 316 of any suitable type or combination, and position information 318 of the APD 180. The position information 318 may be obtained or configured using the position sensor 308 or programmed into the APD 180, such as during installation. The position information 318 indicates a position of the APD 180 and may include a location, geographic coordinates, orientation, elevation information, or the like. A base station 120 and/or the UE 110, by way of a BS APD manager 266 and/or the UE APD manager 216, respectively, can use the position information 318 in computing angular or distance information, such as between the base station 120 and APD 180 and/or between the APD 180 and a UE 110 of interest. The codebooks 316 can include surface-configuration codebooks that store surface-configuration information for a RIS of an APD and beam-sweeping codebooks that store patterns, sequences, or timing information (e.g., phase vectors and reflection identifiers) for implementing multiple surface-configurations useful to direct an APD to perform a variety of reflective beamforming. In some aspects, the surface-configuration codebooks and beam-sweeping codebooks include phase-vector information, angular information (e.g., calibrated to respective phase vectors), and/or beam-configuration information.

In aspects of intra-UECS communication via an APD, the CRM 312 of the APD 180 includes an adaptive phase-changing device manager 320 (APD manager 320). Alternatively or additionally, the APD manager 320 may be implemented in whole or part as hardware logic or circuitry integrated with or separate from other components of the APD 180. Generally, the APD manager 320 manages a surface configuration of the APD 180, such as by processing information exchanged with a base station over wireless link 136 and/or a UE over wireless link 137 and using the information to configure a reconfigurable intelligent surface 322 (RIS 322) of the APD 180. To illustrate, the APD manager 320 receives an indication of a surface configuration over the wireless links 136 and/or 137 (an APD control channel), extracts the surface configuration from the codebooks 316 using the indication, and applies the surface configuration to the RIS 322. Alternatively or additionally, the APD manager 320 initiates the transmission of uplink messages to the base station and/or the UE over the wireless links 136 and/or 137, such as acknowledgments/negative acknowledgments (ACKs/NACKs) for various APD configuration or management commands. In some aspects, the APD manager 320 receives an indication of a beam-sweeping pattern (e.g., beam-sweeping pattern index) over the wireless links 136 and/or 137 and applies a sequence of various surface configurations to the RIS based on the beam-sweeping pattern and/or in accordance with a synchronization or pattern timing indicated by or received with the indication.

The RIS 322 of the APD 180 includes one or more configurable surface element(s) 324, such as configurable electromagnetic elements, configurable resonator elements, or configurable reflectarray antenna elements. Generally, the configurable surface elements 324 can be selectively or programmatically configured to control how the RIS 322 reflects (e.g., directionality) and/or transforms incident waveforms. By way of example and not of limitation, configurable electromagnetic elements include scattering particles that are connected electronically (e.g., through PIN diodes). Implementations use the electronic connection to arrange the scattering particles, such as based on principles of reflection, to control a directionality, phase, amplitude, and/or polarization of the transformed waveform (from the incident waveform). The RIS 322 can include array(s) of configurable surface element(s) 324, where an array can include any number of elements having any size.

In some aspects, a position and/or orientation of the APD 180 is configurable, and the APD 180 includes a motor controller 326 communicating with one or more motor(s) 328 that are operably coupled with a physical chassis of the APD 180. Based on command and control information, such as received from a base station 120, the motor controller 326 can send commands to the motors 328 that alter one or more kinematic behaviors of the motors 328, which may include any suitable type of stepper motor or servo. For example, the motor controller 326 may issue commands or control signals that specify a shaft rotation of a stepper motor in degrees, a shaft-rotation rate of a stepper motor in revolutions-per-minute (RPM), a linear movement of a linear motor millimeters (mm), a linear velocity of a linear motor in meters/second (m/s). The one or more motors 328, in turn, may be linked to mechanisms that mechanically position the physical chassis or a platform (e.g., avionics of a drone, a drive of a linear rail system, a gimble within a base station, a linear bearing within a base station) supporting the APD 180. Through the commands and signals that the motor controller 326 generates and sends to the motors 328, a physical position, location, or orientation of the APD 180 (and/or the platform supporting the APD 180) may be altered. In response to receiving a position configuration from a base station, the APD manager 320 communicates movement commands to the motor controller 326, such as through a software interface and/or hardware addresses, based on the position configuration. In aspects of intra-UECS communication via an APD, a base station 120 may reposition or reorient one or more APDs 180 to improve or enable wireless signal reflections to be directed to the UE 110.

Generally, the APD 180 can include multiple motors, where each motor corresponds to a different rotational or linear direction of movement. Examples of motor(s) 328 that can be used to control orientation and location of the APD include linear servo motors that might be part of a (i) rail system mounting for the APD, (ii) motors controlling a direction and pitch, yaw, roll of a drone carrying the APD, (iii) radial servo or stepper motors that rotate an axis if the APD is in a fixed position or on a gimbal, and so on. For clarity, the motor controller 326 and the motors 328 are illustrated as being a part of the APD 180, but in alternative or additional implementations, the APD 180 communicates with motor controllers and/or motors external to the APD. To illustrate, the APD manager 320 communicates a position configuration to a motor controller that mechanically positions a platform or chassis that supports the APD 180. In aspects, the APD manager 320 communicates the position configuration to the motor controller using a local wireless link, such as Bluetooth^{™}, Zigbee, IEEE 802.15.4, or a hardwire link. The motor controller then adjusts the platform based on the position configuration using one or more motors. The platform can correspond to, or be attached to, any suitable mechanism that supports rotational and/or linear adjustments, such as a drone, a rail-propulsion system, a hydraulic lift system, and so forth.

As shown in FIG. 3, a position of the APD 180 may be defined with respect to a three dimensional coordinate system in which an X-axis 330, Y-axis 332, and Z-axis 334 define a spatial area and provide a framework for indicating a position configuration through rotational and/or linear adjustments. While these axes are generally labeled as the X-axis, Y-axis, and Z-axis, other frameworks can be utilized to indicate the position configuration. To illustrate, aeronautical frameworks reference the axes as vertical (yaw), lateral (pitch), and longitudinal (roll) axes, while other movement frameworks reference the axes as vertical, sagittal, and frontal axes. As one example, position 336 generally points to a center position of the APD 180 that corresponds to a baseline position (e.g., position (0,0,0) using XYZ coordinates).

In aspects, the APD manager 320 communicates a rotational adjustment (e.g., rotational adjustments 338) around the X-axis 330 to the motor controller 326, where the rotational adjustment includes a rotational direction (e.g., clockwise or counterclockwise), an amount of rotation (e.g., degrees), and/or a rotation velocity. Alternatively or additionally, the APD manager 320 communicates a linear adjustment 340 along the X-axis, where the linear adjustment includes any combination of a direction, a velocity, and/or a distance of the adjustment. At times, the APD manager 320 communicates adjustments around the other axes as well, such as any combination of rotational adjustments 342 around the Y-axis 332, linear adjustments 344 along the Y-axis 332, rotational adjustments 346 around the Z-axis 334, and/or linear adjustments 348 along the Z-axis 334. Thus, the position configuration can include combinations of rotational and/or linear adjustments in all three degrees of spatial freedom. This allows the APD manager 320 to communicate physical adjustments to the APD 180. Alternatively or additionally, the APD manager communicates RIS surface configurations as further described.

### Intra-UECS Communications via an APD

UEs within a UECS use intra-UECS communications to share or distribute signal-related information for downlink and/or uplink UECS communications exchanged with a base station or other wireless network element. For example, the UEs establish side links with one another using a local wireless connection and/or air interface resources allocated by a base station. By having multiple UEs form a UECS for joint transmission and/or reception of network data for a target UE within the UECS, the UEs in the UECS coordinate in a manner similar to a distributed antenna to improve the effective signal quality between the target UE and the base station. While this coordination helps improve the effective signal quality of wireless transmissions, the intra-UECS communications used to coordinate the UEs often require high bandwidth. In aspects, the UEs within the UECS transmit the intra-UECS communications using high-frequency bands, such as through mmWave transmissions, to obtain the high bandwidth. However, because these transmissions are more susceptible to signal distortions relative to lower frequency-band transmissions, it becomes desirable to correct the signal distortions in order to obtain the performance benefits (e.g., increased data capacity) provided by the high-frequency band transmissions.

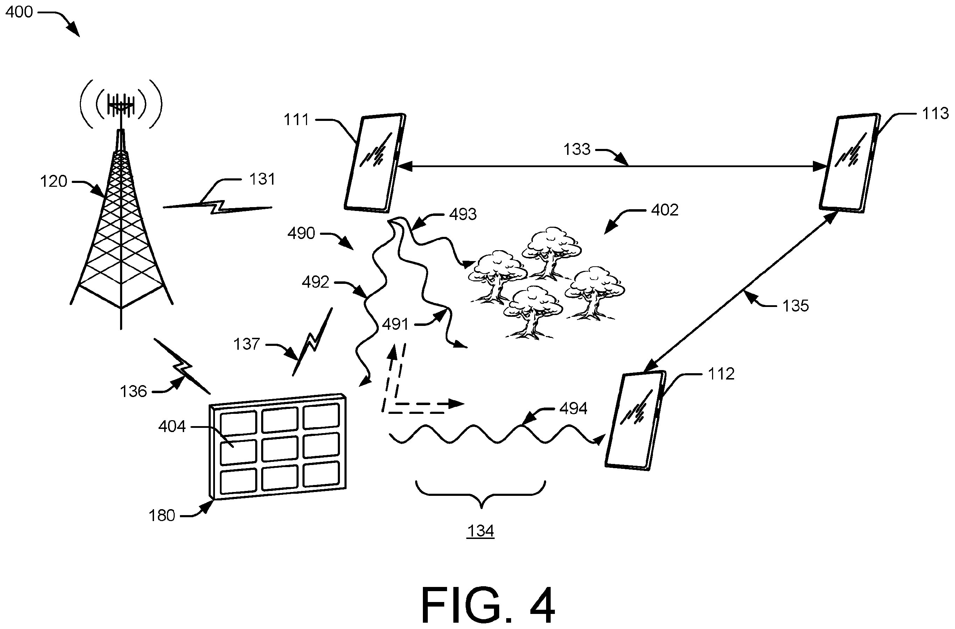

FIG. 4 illustrates an example environment 400 that implements various aspects of intra-UECS communication via an APD. The environment 400 includes the base station 120, the APD 180, and the UEs 111, 112, and 113 that form the UECS 108 of FIG. 1. The base station 120 communicates with the UECS 108 over the wireless link 131 by transmitting a downlink wireless signal. Alternatively or additionally, the UECS 108 communicates with the base station 120 by transmitting an uplink wireless signal over the wireless link 131 or another wireless connection with the base station 120 (e.g., a low-frequency anchor connection below 6 GHz).

The UEs 111, 112, and 113 transmit intra-UECS communications to one another using the wireless links 133, 134, and 135 formed using a local wireless connection and/or air interface resources allocated by the base station 120 for side link communications. In aspects, the UEs include the APD 180 in at least one of the intra-UECS communication paths.

In the environment 400, the UE 111 transmits a wireless signal 490 to UE 112. The wireless signal 490 includes a first signal ray 491 that propagates towards the UE 112 in a LoS manner, a second signal ray 492 that propagates towards the APD 180, and a third signal ray 493 that propagates towards an obstruction 402 (illustrated as foliage) that blocks the signal ray 493 from reaching the UE 112. Alternatively or additionally, the UE 112 communicates with the UE 111 over the wireless link 134 by transmitting a wireless signal towards the UE 111 and/or the APD 180. In aspects, the UE 111 transmits wireless signals to the APDs 180 in a high-frequency band that is at or above 6 GHz, such that signal rays 491, 492, and/or 493 may be blocked by obstructions (e.g., temporary LoS obstructions of signal ray 491, not shown). Individual signal rays 491, 492, and 493 of the wireless signal 490 may be transmitted simultaneously or at different times.

In various implementations, the APD 180 (or other APDs) participate in the intra-UECS communications between the UEs included in the UECS by transforming (e.g., reflecting) waveforms using an RIS of the APD 180 with a surface configuration selected by the base station 120 and/or a coordinating UE (e.g., the UE 111). To illustrate, the signal ray 492 strikes the surface of the APD 180, shown with a reconfigurable intelligent surface 404 (RIS 404), and transforms into the signal ray 494, which is directed toward the UE 112. As part of receiving the wireless signal 490, the UE 110 may receive the signal ray 491 and the signal ray 494 (but not the signal ray 493).

In implementations, a coordinating UE (e.g., the UE 111) and/or the base station 120 configure the RIS 404 to direct how the signal ray 492 transforms into the signal ray 494 and reflects from the APD 180 towards the UE 112. Alternatively or additionally, the RIS 404 transforms an incident signal ray from the UE 112 on a path reciprocal to signal ray 494 into another signal ray that follows a path reciprocal to that of signal ray 492 to the UE 111. For example, the coordinating UE and/or the base station 120 analyze link-quality measurements, measurement reports, and/or other values to identify channel impairments. By way of example and not of limitation, various link-quality measurements that do not meet an acceptable performance level can indicate channel impairments, such as by a delay spread between a first received signal and a last received signal (e.g., received multipath rays) exceeding an acceptable delay spread threshold or by an average time-delay (of the multipath rays) exceeding an acceptable average time-delay threshold. As another example, the base station may determine an estimated UE-location using a direction-of-departure estimation for a reflection off a surface of the APD between the base station and a UE. The coordinating UE (e.g., UE 111) and/or the base station 120 then use the estimated UE-location to access historical data records that indicate a history of channel impairment(s) at the estimated UE-location and/or a history of APD-usage. In response to identifying the channel impairments, the coordinating UE and/or the base station 120 select a surface configuration for the RIS 404 that transforms at least a portion of a first wireless signal (e.g., signal ray 492) into a second wireless signal (e.g., signal ray 494) to mitigate the channel impairments by improving a received signal quality.

In aspects, the coordinating UE (e.g., the UE 111) and/or the base station 120 select the surface configuration from a surface-configuration codebook. As one example, the coordinating UE analyzes the codebook to identify a surface configuration that modifies and/or transforms various signal characteristics of a wireless signal, such as modifying one or more desired phase characteristic(s), one or more amplitude characteristic(s), a polarization characteristic, and so forth. In some implementations, the coordinating UE and/or the base station 120 use historical data records to select a surface configuration. For instance, the base station obtains an estimated UE-location using information indicated by the link-quality measurements, measurement reports, and/or other values, and accesses historical data records using the estimated UE-location, where the historical data records include surface configurations that result in acceptable performance levels at the estimated UE-location.

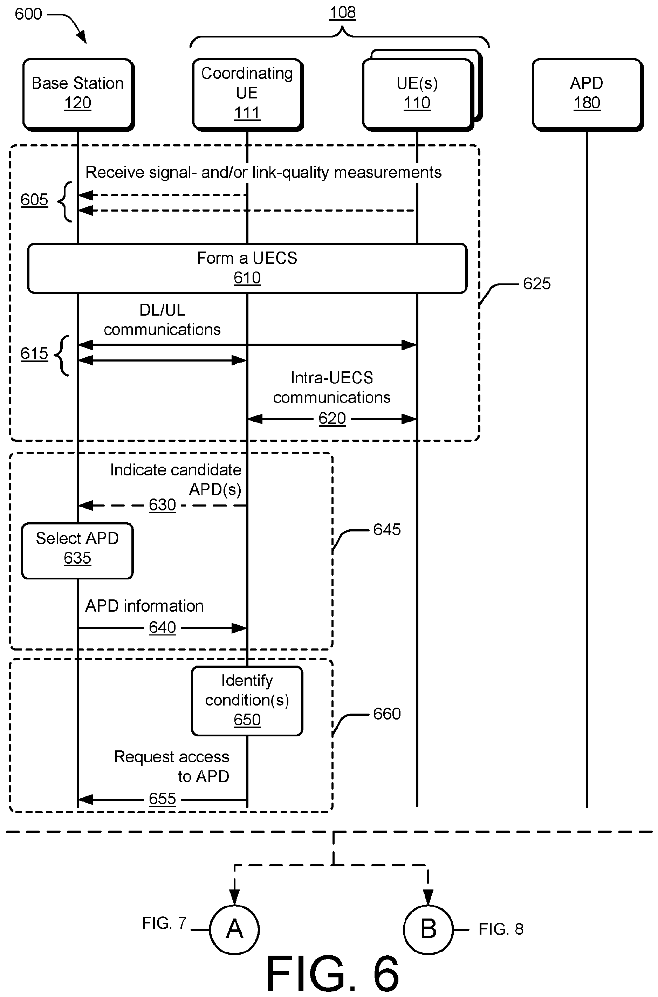

In various implementations, the coordinating UE (e.g., the UE 111) communicates surface-configuration information to the APD 180 over the wireless link 137. Alternatively or additionally, the coordinating UE communicates the surface-configuration information to the base station 120, and the base station 120 relays the surface-configuration information to the APD 180 using the wireless link 136. As one example, the wireless link 136 and/or the wireless link 137 operate as an adaptive phase-changing device-slow-control channel (APD-slow-control channel), where the coordinating UE and/or the base station transmit messages that indicate a surface configuration to the APD 180, similar to layer 2 or layer 3 control messages that communicate information using information elements (IEs). Alternatively or additionally, the wireless link 136 and/or the wireless link 137 include an adaptive phase-changing device-fast-control channel (APD-fast-control channel), where the coordinating UE and/or the base station indicate control information using signaling, sometimes on a slot-by-slot basis, for quick surface-configuration changes (e.g., surface configurations applied on a slot-by-slot basis). For instance, the coordinating UE and/or the base station 120 transmits an index into a surface-configuration codebook to indicate a phase vector as the surface configuration using the APD-slow-control channel or the APD-fast-control channel, such as that described with reference to FIGs. 6-11.

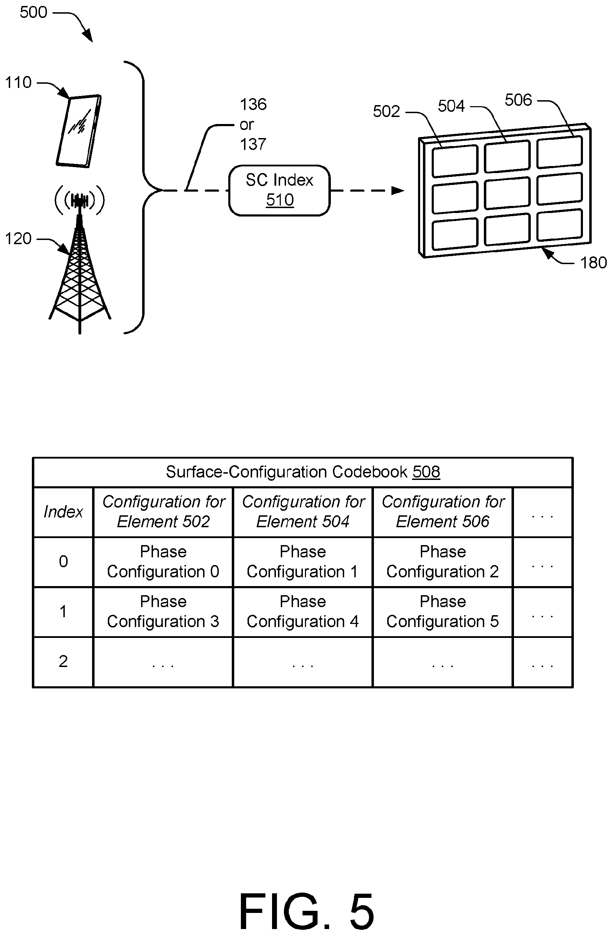

By way of example, consider FIG. 5, which illustrates an example 500 of configuring a surface of an APD 180 in accordance with one or more aspects of intra-UECS communication via an APD. The example 500 includes instances of a base station 120, a UE 110, and an APD 180, which may be implemented similarly as described with reference to FIGs. 1-4. The RIS implemented by the APD 180 includes an array of "N" configurable surface elements, such as configurable surface element 502, configurable surface element 504, configurable surface element 506, and so forth, where "N" represents the number of configurable surface elements of the RIS.

In implementations, the base station 120 and/or a UE 110 (e.g., a coordinating UE) manage a configuration of the RIS of the APD 180 through use of a surface-configuration codebook 508, which can be preconfigured and/or known by the base station 120, the UE 110, and/or the APD 180. In some cases, the base station 120 and/or the UE 110 transmit a surface-configuration codebook 508 and/or a beam-sweeping codebook using the wireless link 136 and/or the wireless link 137, such as over an APD-slow-control channel using one or more messages. In aspects, the base station 120 and/or the UE 110 use the APD-slow-control channel to communicate large quantities of data, to communicate data without low-latency requirements, and/or to communicate data without timing requirements. At times, the base station 120 and/or the UE 110 transmit multiple surface-configuration codebooks to the APD 180, such as a first surface-configuration codebook for downlink communications, a second surface-configuration codebook for uplink communications, a phase-vector codebook, a beam-sweeping codebook, or the like. In response, the APD 180 stores the surface-configuration codebook(s) 508 and/or other codebooks in CRM, which is representative of codebook(s) 316 in CRM 312 as described with reference to FIG. 3. Alternatively or additionally, the APD 180 obtains the surface-configuration and other codebooks through manufacturing (e.g., programming), calibration, or installation processes that store the surface-configuration codebook(s) 508 and other codebooks in the CRM 312 of the APD 180 during assembly, installation, calibration, verification, or through an operator manually adding or updating the codebook(s).

The surface-configuration codebook 508 includes configuration information that specifies a surface configuration for some or all of the configurable surface elements (e.g., elements 324) forming the RIS of the APD 180. As one example, each index of the code book corresponds to a phase vector with configuration information for each configurable surface element of the APD 180. Index 0, for instance, maps phase configuration 0 to configurable surface element 502, phase configuration 1 to configurable surface element 504, phase configuration 2 to configurable surface element 506, and so forth. Similarly, index 1 maps phase configuration 3 to configurable surface element 502, phase configuration 4 to configurable surface element 504, phase configuration 5 to configurable surface element 506, and so forth. The surface-configuration codebook 508 can include any number of phase vectors that specify configurations for any number of configurable surface elements such that a first phase vector corresponds to a first surface-configuration for the APD 180 (by way of configurations for each configurable surface element in the RIS), a second phase-vector corresponds to a second surface configuration for the APD 180, and so on. Alternatively or additionally, the codebook 508 can specify phase vectors that configure a subset of configurable surface elements. In aspects, one or more surface configurations or phase vectors may be mapped or calibrated to specific angle information of incident and/or reflective wireless signals (e.g., reference signals), signal rays, beamformed transmission of the base station 120, or the like.

While the surface-configuration codebook 508 of FIG. 5 includes phase vector information, alternative or additional codebooks store beam configuration information, such as a first surface configuration that specifies a first beam with a first (propagation) direction, a second surface configuration that specifies a second beam with a second direction, and so on. Thus, in various implementations, the surface-configuration codebook 508 corresponds to a beam-codebook, which may enable the APD 180 to implement beamforming of incident wireless signals. Similarly, to configure the surface of the APD 180, the base station 120 and/or the UE 110 determines the desired beam configuration for the transformed signal and identifies an entry in the beam-codebook corresponding to the desired beam configuration. In some aspects, a beam-sweeping codebook indicates a pattern of surface configurations and/or beam configurations, such as surface configurations and/or beam configurations, as indicated by the surface-configuration codebook 508 and beam configurations specified by the beam-codebook. To illustrate, the beam-sweeping codebook indicates an order of surface configurations and optionally APD reflection identifiers to cycle through in order to beam sweep in a horizontal direction or vertical direction. Alternatively or additionally, the beam-sweeping codebook indicates a time duration for applying each surface configuration effective to steer a reflected beam in a specific direction for the duration of time.

The surface-configuration information stored in a codebook can correspond to a full configuration that specifies an exact configuration (e.g., configure with this value) or a delta configuration that specifies a relative configuration (e.g., modify a current state by this value). In one or more implementations, the phase configuration information specifies a directional increment and/or angular adjustment between an incident signal and a transformed signal. For instance, the phase configuration 0 can specify an angular adjustment configuration for element 502 such that the configurable surface element 502 reflects the incident waveform with a "phase configuration 0" relative angular or directional shift. As shown in FIG. 5, the base station 120 and/or the UE 110 communicate an indication to the APD 180 that specifies a surface configuration. In the present example, the indication specifies a surface configuration index 510 (SC index 510) that maps to a corresponding surface configuration of the APD 180. In response to receiving the indication, the APD manager 320 retrieves the surface configuration from the surface-configuration codebook 508 using the index and applies the surface configuration to the RIS. For example, the APD manager 320 configures each configurable surface element (or each configurable surface element of a subset of configurable surface elements) as specified by a respective entry in the surface-configuration codebook 508.

In various implementations, the base station 120 and/or UE 110 communicate timing information (not shown) to the APD 180, which may be included with a surface configuration or beam-sweeping index. For instance, the base station 120 and/or the UE 110 sometimes indicate, to the APD 180 and using the wireless link 136 or 137, respectively, a start time for the application of an indicated surface configuration or beam-sweeping pattern. In aspects, the base station 120 and/or the UE 110 communicate a stop time that indicates when to remove and/or change the surface configuration or beam-sweeping pattern. In changing the surface configuration, the APD 180, by way of the APD manager 320, can apply a default surface configuration, return to a previous surface configuration (e.g., a surface configuration used prior to the indicated surface configuration), and/or apply a new surface configuration to control a direction in which the APD 180 reflects wireless signals. To maintain synchronized timing, the APD 180 can receive and/or process a base station synchronizing signal.

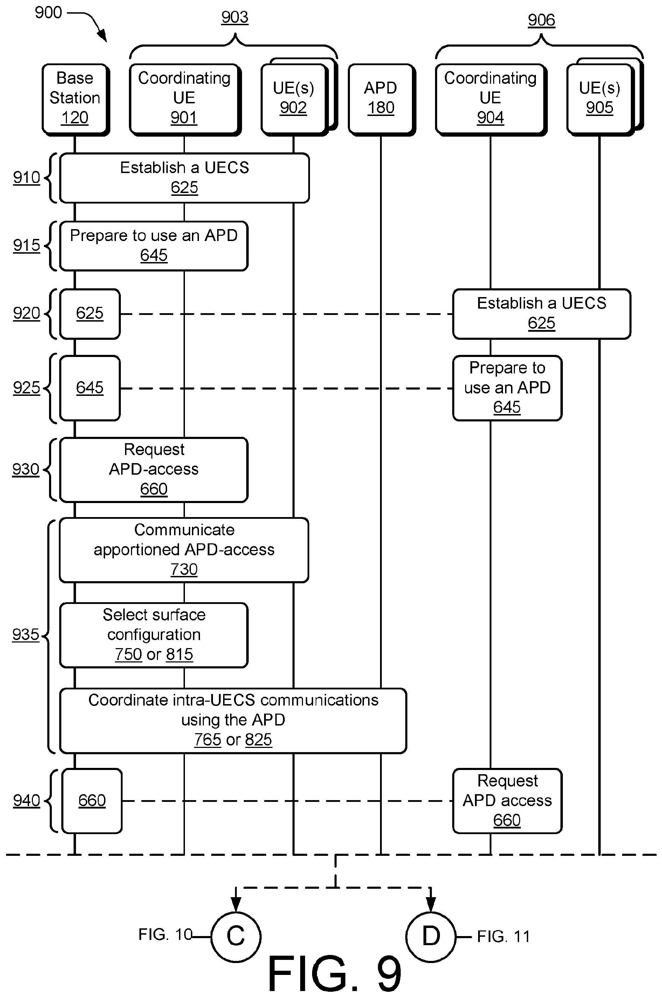

By specifying the timing information, the base station 120 and/or UE 110 can use time-partitioning to apportion access to the APD 180. Alternatively or additionally, the base station 120 and/or the UE 110 can use configurable-surface-element partitioning to apportion access to the APD 180. As one example, the base station 120 shares access to the APD 180 with one or more UECSs, such as that described with reference to FIGs. 6-8. As another example, as described with reference to FIGs. 9-11, a first coordinating UE of a first UECS shares access to the APD 180 with a second coordinating UE of a second UECS. To illustrate, the first coordinating UE configures the APD 180 for intra-UECS communications of the first UECS by specifying a start time, a time duration, and/or a stop time to apply a first surface configuration to the RIS. In a similar manner, a second coordinating UE of a second UECS configures the APD 180 for intra-UECS communications of the second UECS by specifying a start time, a time duration, and/or a stop time to apply a second surface configuration to the RIS. In aspects, the base station 120, the first coordinating UE, and/or the second coordinating UE transmit surface-configuration indications and/or timing information using an APD-fast-control channel, which allows the base station and/or the coordinating UEs to dynamically configure the APD 180 on a slot-by-slot basis. Alternatively or additionally, the first coordinating UE and the second coordinating UE configure (and use) subsets of configurable surface elements as further described. This allows the coordinating UEs in the UECS to utilize the APD for intra-UECS communications and improve data rates, spectral efficiency, data throughput, and reliability of communications in the corresponding wireless network.

### Signaling and Control Transactions for Intra-UECS Communications via an APD

FIGs. 6, 7, 8, 9, 10, and 11 illustrate example signaling and control transaction diagrams in accordance with one or more aspects of intra-UECS communications via an APD. In aspects, operations of the signaling and control transactions may be performed by any combination of devices, including a base station (e.g., the base station 120) and multiple UEs (e.g., UE 111, UE 112, UE 113) using aspects as described with reference to any of FIGs. 1-5.

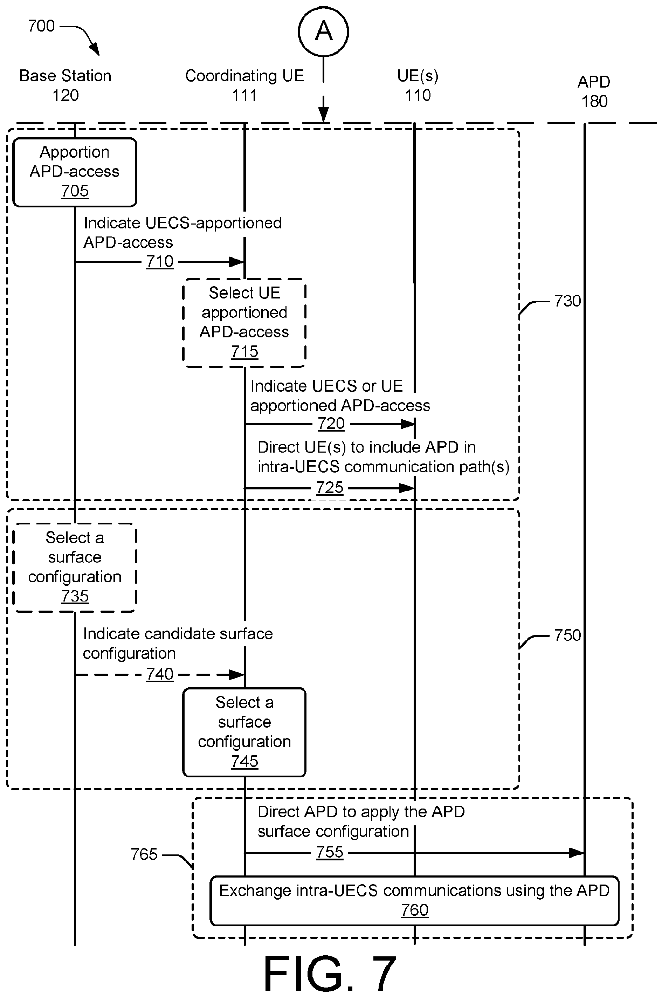

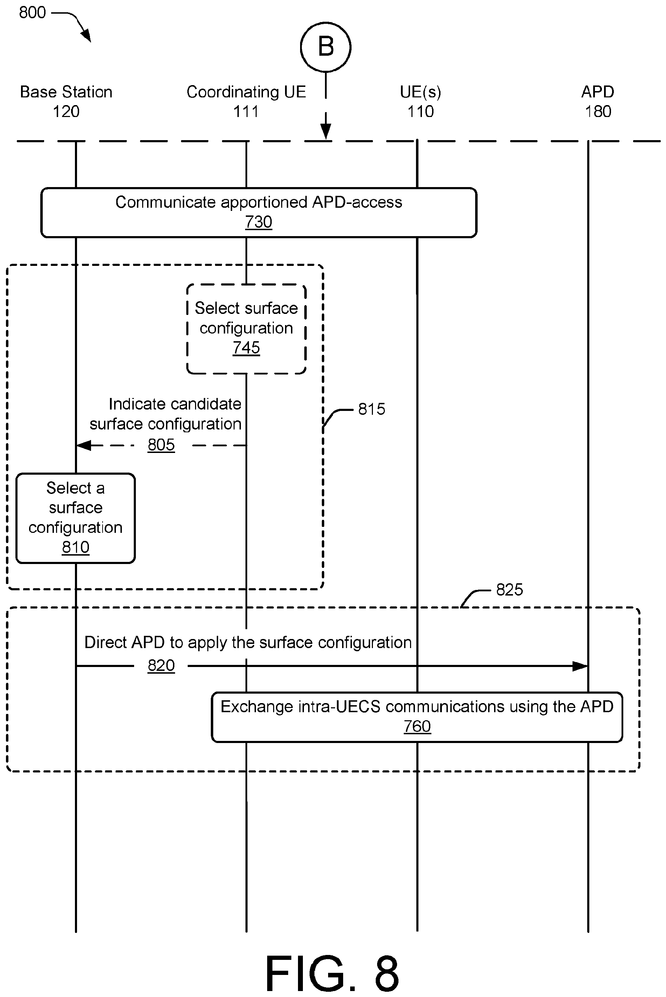

A first example of signaling and control transactions for intra-UECS communications via an APD is illustrated by the signaling and control transaction diagram 600 of FIG. 6, where the diagram 600 leads to (a) additional signaling and control transactions as illustrated by FIG. 7, or (b) additional signaling and control transactions as illustrated by FIG. 8. The diagram 600 includes signaling and control transactions among the base station 120, a coordinating UE 111, one or more other UEs 110 (e.g., non-coordinating UEs), and/or the APD 180.

As illustrated, at 605, the UE 111 and/or the other UE(s) 110 optionally communicate signal-quality measurements, link-quality measurements, measurement reports, and/or other values to the base station 120. For instance, as part of establishing and/or maintaining a wireless link with each of the UE 111 and/or the other UEs 110, the base station 120 transmits a (respective) radio resource control (RRC) reconfiguration message (not illustrated) that directs each UE to perform measurements. In response to the RRC reconfiguration message, the UEs communicate respective signal and/or link-quality measurements, such as measurement reports, values, or other feedback. Alternatively or additionally, the base station 120 communicates threshold values to each of the UE 111 and/or the other UEs 110 (e.g., a same threshold value or different threshold values) that indicate a trigger to send the respective signal-quality measurements, link-quality measurements, and/or measurement reports. In some aspects, the base station 120 generates signal- and/or link-quality measurements using uplink signals received from each of the UEs (e.g., the UE 111 and/or the other UEs 110).

At 610, the base station 120 directs at least the UE 111 and the other UEs 110 to form a UECS (e.g., the UECS 108). In aspects, to form the UECS, the base station 120 selects which UEs to include in the UECS based on analyzing the signal-quality measurements, link-quality measurements, UE capabilities, estimated UE-locations, measurement reports, and/or other characteristics received at 605. For instance, the base station 120 selects UEs that are within a threshold distance to one another, UEs that indicate they have UECS capabilities, UEs with more than a first threshold value of battery power remaining, UEs with received signal strength above a second threshold value, UEs with similar capabilities (e.g., processing power, memory size), and so forth.

Forming the UECS can include multiple signaling and control transactions between the base station 120 and the UEs. These signaling and control transactions, such as signaling and control transactions corresponding to the base station 120 communicating directly with each UE, are not illustrated here for visual brevity. To illustrate, the base station 120 transmits a request message (e.g., a configuration message) that directs the UE 111 to coordinate the joint transmission and reception of the data intended for a target UE. In at least one example, the base station 120 transmits a signal to each UE (e.g., the UE 111, the other UEs 110) that directs each UE to participate in joint reception of downlink data for a target UE, such as by down-converting and sampling an RF signal to determine In-phase/Quadrature (I/Q) baseband signals and then forwarding the baseband I/Q samples to the coordinating UE (UE 111) for decoding of the data at the coordinating UE. In some aspects, as part of forming the UECS 108, the base station communicates APD information to the coordinating UE, such as that described by the sub-diagram 645.

After the UE 111 and the other UEs 110 form the UECS 108, at 615, the base station 120 jointly transmits downlink communications to the UEs in the UECS 108 and/or jointly receives uplink communications from the UEs in the UECS. Similarly, at 620, the UE 111 and the other UEs 110 perform sidelink transmissions of the downlink/uplink communications (addressed to a target UE within the UECS) by communicating with one another using intra-UECS communications. To illustrate, the UE 111 and the other UE(s) jointly receive downlink transmissions from the base station 120 at 615 and locally transmit baseband I/Q samples over a side link to the coordinating UE (e.g., UE 111) using intra-UECS communications at 620. For joint uplink transmissions, the intra-UECS communications 620 use sidelinks to distribute uplink data from the target UE to a coordinating UE and then from the coordinating UE to other UEs within the UECS. Afterwards, the UEs in the UECS modulate and jointly transmit signals at 615 to the base station 120.

Generally, the transactions 605, 610, 615, and 620 correspond to a sub-diagram 625 in which multiple devices (e.g., the base station 120, the UE 111, the other UEs 110) establish and use a UECS. The sub-diagram 625 can include alternative or additional transactions.

At 630, the UE 111 (acting as a coordinating UE) optionally indicates one or more candidate APDs to the base station 120. As one example, the UE 111 identifies one or more APDs within operating range, such as by monitoring for an APD-broadcast signal and/or message emitted from the APD(s) that announces a presence of the APD to the coordinating UE. Alternatively or additionally, the coordinating UE identifies and/or estimates current location(s) of one or more UEs within the UECS (e.g., the UE 111, the other UEs 110) and accesses APD records that indicate the APDs within a threshold distance of the current locations. The UE 111, for instance, estimates its current location using Global Positioning System (GPS) and/or Global Navigation Satellite System (GNSS) location information and finds nearby APDs using a stored map or table. Alternatively or additionally, the coordinating UE queries the other UE(s) using intra-UECS communications, and each of the other UE(s) replies to the query with respective location information that the coordinating UE can use to locate candidate APDs using the stored map or table. In aspects, as the coordinating UE and/or the other UE(s) move locations, the coordinating UE updates the list of candidate APDs by removing and/or adding APDs based on the updated location information.

At 635, the base station 120 selects an APD for the UEs in the UECS to use for intra-UECS communications. As one example, the base station 120 selects an APD currently used by the base station to communicate with one or more UEs included in the UECS. Alternatively or additionally, the base station 120 calculates and/or identifies a respective estimated UE-location for each UE in the UECS (e.g., based on signal and/or link quality parameters, based on GPS and/or GNNS information) and analyzes APD records and/or historical data records using the estimated UE-location(s) to identify candidate APDs. In some aspects, the base station 120 queries a server for APDs within a threshold distance of the estimated UE-location and/or candidate APDs within a cell service area of the base station 120, such as a server included in the core network 150 of FIG. 1.

In aspects, the base station 120 analyzes the APD capabilities of each candidate APD (e.g., a number of configurable surface elements, a configuration bit-resolution for the configurable surface elements, supported surface-configuration codebooks, APD-surface sharing capabilities) and selects an APD to assign to the UECS based on the APD capabilities. To illustrate, the base station 120 queries each of the candidate APDs for APD capabilities using a respective APD control channel and/or accesses a server with APD records to obtain the APD capabilities and then selects an APD that supports desirable APD capabilities. For instance, as described with reference to FIGs. 9-11, a base station communicating with at least two UECSs may identify and select an APD that supports surface sharing (e.g., by querying the APD for capabilities, by analyzing historical records) and apportion the surface of the APD between the two UECSs. As other examples, the base station may select the APD in the candidate APDs that includes the highest number of configurable surface elements, has the largest configurable surface area, or has a surface angle best suited to reach one or more UEs included in the UECS.

At 640, the base station 120 indicates APD information to the coordinating UE (e.g., the UE 111). This includes indicating any combination of APD identification information, APD position information, APD control channel information, surface-configuration codebooks, and so forth. In general, the APD information may include any information relating to the APD 180 (e.g., one or more properties or configuration settings of the APD) that can be used, by a UE in the UECS, to enable intra-UECS communication via the APD.

Generally, the transactions 630, 635, and 640 correspond to a sub-diagram 645 in which the base station 120 and the UE 111 (acting as a coordinating UE) prepare a UECS to use an APD for intra-UECS communications. The sub-diagram 645 can include alternative or additional transactions not illustrated for visual brevity. At times, the transactions included in the sub-diagram 645 iteratively repeat, such as when the location of various UEs included in the UECS move to a new location in which another APD may better serve the UECS. Thus, the coordinating UE and/or the base station may identify new candidate APDs as the UEs move to new locations and/or select a new APD as conditions change. This allows the base station and the coordinating UE to synchronize APD information and update and prepare the UECS on what APD to use for intra-UECS communications as conditions change (e.g., UE locations or environmental conditions). In aspects, some or all of the signaling and control transactions included in the sub-diagram 645 can be performed as part of forming the UECS as described at 610.

At 650, the UE 111 identifies one or more conditions that indicate to use an APD for intra-UECS communications. For instance, a coordinating UE analyzes one or more signal-and/or link-quality measurements generated from the intra-UECS communications and identifies that signal- and/or link-quality measurements have fallen below an acceptable performance threshold and/or level. Alternatively or additionally, the coordinating UE identifies that the link quality parameter(s) indicate a channel impairment. In aspects, the coordinating UE identifies that one or more estimated UE-locations indicate to utilize APD(s) in one or more intra-UECS communication paths between UEs in the UECS. For example, the coordinating UE identifies that at least one UE in the UECS has moved to a location with a history of channel impairment(s), such as by analyzing historical data records that indicate historical signal measurements and/or link quality parameters from the same or other UEs at the estimated UE-location.

At 655, the UE 111 requests access to the APD, such as reflection-access to utilize the surface of the APD and/or control-access to configure the surface of the APD. To illustrate, a coordinating UE transmits the request to the base station 120 over the wireless link 131 of FIG. 1. This can include the coordinating UE, in the role of a target UE, using the UECS to jointly transmit the request to the base station to effectively improve the effective signal quality between the target UE and the base station.

Generally, the transactions 650 and 655 correspond to a sub-diagram 660 in which a coordinating UE requests access to an APD from a base station managing the APD-access (e.g., reflection-access, control-access). The sub-diagram 660 can include alternative or additional transactions not illustrated for visual brevity.

At this point, the diagram 600 can proceed to at least two alternative paths: option "A" (described in FIG. 7) or option "B" (described in FIG. 8). FIG. 7 depicts a signaling and control transaction diagram 700 in which a coordinating UE communicates a surface configuration to an APD directly over an APD-control channel. FIG. 8 depicts a signaling and control transaction diagram 800 in which a base station relays a surface configuration to an APD for a coordinating UE.

Continuing to option "A" in FIG. 7, at 705, the base station 120 apportions (e.g., divides and/or assigns) APD-access to the UECS 108, alternately referred to as UECS-apportioned APD-access. To illustrate, the base station 120 apportions reflection-access to the APD 180 using time partitioning and assigns a first time-duration to the UECS 108. Based on the time-partitioned access, the UECS 108 (by way of the coordinating UE) agrees to use (and/or configure) the surface of the APD 180 during the first time-duration and refrain from using (and/or configuring) the surface of the APD 180 during a second time-duration. In some aspects, the base station 120 uses the APD 180 during the second time-duration. Alternatively, a second UECS (not illustrated in FIG. 7) uses the APD 180 during the second time-duration, such as that described with reference to FIGs. 9-11. The time divisions determined by the base station do not have to be equal and may depend on the amount of data buffered for transmission by the base station and/or the UECS, the frequency bandwidth of the carrier signals, and other factors. The base station can determine periodic (e.g., semi-persistent) time-partitioned access and/or dynamic time-partitioned access (e.g., only used once).

Alternatively or additionally, the base station 120 apportions reflection-access to the APD 180 using configurable-surface-element partitioning, such as by apportioning subsets of configurable surface elements that form the RIS. For example, with reference to FIG. 5, the base station 120 apportions the configurable surface element 502 to the UECS 108 and the configurable surface element 506 to the base station 120 and/or another UECS as further described. This can include any type of configurable-surface-element partitioning, such as horizontal partitioning that groups elements in a same horizontal row, vertical partitioning that groups elements in a same vertical column, quadrant partitioning, and so forth. The configurable-surface-element partitions do not have to be equal and may depend on the amount of data buffered for transmission to the base station and/or the UECS, the coverage area of the base station's signals to the UECS, the operating area of the UECS or the locations of its individual UEs, the frequency bandwidth of the carrier signals, each device's MIMO configurations, and other factors.

As part of apportioning APD-access to the APD 180, the base station 120 sometimes apportions control-access to the APD. The base station 120, for instance, apportions physical resources of an APD-control channel (e.g., wireless link 137 of FIG. 1), such as when the APD 180 only supports a single physical APD-control channel instead of multiple physical APD-control channels. A single physical APD-control channel, however, may support receipt of APD-control messages directly from different devices (e.g., multiple UEs, a UE and a base station, multiple base stations). The base station 120, for instance, assigns a first resource block of the APD-control channel to the coordinating UE (e.g., UE 111) and a second resource block of the APD-control channel to a second coordinating UE (not illustrated in FIG. 7) of a second UECS as further described. Alternatively or additionally, the base station 120 assigns a first control channel element (CCE) (e.g., resource element (RE), resource element group (REG)) to the base station 120 and a second CCE to the coordinating UE of the UECS 108. As another example, the base station 120 assigns a first time-slot of the shared APD-control channel to the coordinating UE and/or a second time-slot of the APD-control channel to a second coordinating UE. When sharing an APD-control channel, the coordinating UE may include a device identifier in APD-control messages. Alternatively, the base station 120 assigns a particular APD-control channel (out of multiple APD-control channels) to the coordinating UE. However, other forms of partitioning can be utilized as well, such as coding-scheme-partitioning that assigns one of several coding schemes (that used to encode communications over the APD-control channels) to the coordinating UE and/or the UECS and/or frequency-partitioning that assigns different frequency (sub)-bands of the APD-control channel to different entities.

At 710, the base station 121 indicates the UECS-apportioned APD-access to the coordinating UE. This can include indicating any combination of apportioned reflection-access and/or apportioned control-access as described at 705.

At 715, the UE 111 optionally selects configurations for UE-apportioned APD-access to the APD 180. For example, assume the base station 120 assigns the UECS 108 (by way of the coordinating UE) periodic time-partitioned reflection-access to the APD. In aspects, a coordinating UE (e.g., UE 111) further apportions the assigned time-partitioned reflection-access between the UEs 110, such as by apportioning a first time-period of the periodic time-partitioned reflection-access to a first UE of the UEs 110, a second time-period of the periodic time-partitioned reflection-access to a second UE of the UEs 110, and so forth. As another example, assume the base station assigns the entire surface of the APD 180 (e.g., all configurable surface elements) to the UECS 108 and that the APD 180 supports surface sharing. In aspects, the coordinating UE further apportions the reflection-access between the UEs 110, such as by apportioning a first subset of configurable surface elements to a first UE of the UEs 110, a second subset of configurable surface elements to a second UE of the UEs 110, and so forth.

At 720, the UE 111 indicates the apportioned APD-access to each of the UEs 110. As one example, a coordinating UE (e.g., the UE 111) indicates the UE-apportioned APD-access selected at 715 to each of the UEs 110. As another example, the coordinating UE indicates, to each of the UEs 110, the UECS-apportioned APD-access indicated at 710.

At 725, the UE 111 directs one or more of the UEs 110 to include the APD 180 in respective intra-UECS communication paths. In some aspects, a coordinating UE (e.g., the UE 111) implicitly directs the UE(s) to include the APD 180 in the intra-UECS communication paths, such as by transmitting the indication of UECS- and/or UE-apportioned access at 720. Alternatively, the coordinating UE explicitly directs the UE(s) using the APD 180 in the intra-UECS communication paths by transmitting signaling and/or messaging that explicitly directs the UEs 110 to include the APD 180 in intra-UECS communication paths (e.g., through a Boolean value, an enumeration field, an information element, or a toggle flag). Thus, the signaling and control transactions at 720 and at 725 can be combined into a single signaling and control transaction or can be implemented as multiple signaling and control transactions.

Generally, the transactions 705, 710, 715, 720, and 725 correspond to a sub-diagram 730 in which a base station 120, a coordinating UE, and other UEs 110 communicate apportioned APD-access with one another to avoid collisions or contentions in various transmissions used for intra-UECS communications. The sub-diagram 730 can include alternative or additional transactions not illustrated for visual brevity.

At 735, the base station 120 optionally selects a surface configuration (e.g., a proposed surface configuration) for the APD that configures the surface of the APD for intra-UECS communication purposes. To illustrate, assume that the base station 120 utilizes the APD in a communication path with the UECS. In aspects, the base station 120 identifies and/or calculates an estimated UE-location of one or more UEs participating in the UECS based on a transmission direction-of-departure at the APD and selects the surface configuration using the estimated UE-location. As another example, the base station 120 identfies and/or calculates the estimated UE-location based on a GNSS-based position reported by one or more UEs, an angle-of-arrival of a UE uplink signal, reference signal receive power (RSRP) of a UE uplink signal, or the like. As such, various link-quality parameters can be used by the base station 120 to obtain or calculate an estimated UE-location, such as through power levels, angles of departure or arrival, and/or timing information (e.g., observed time of arrival) of uplink or downlink communications with UEs included in the UECS 108. The base station 120 then selects a surface configuration for the APD using any combination of the estimated UE-locations, signal-quality measurements, link-quality measurements, and so forth, to provide the coordinating UE with additional information that may improve how the coordinating UE configures the surface of the APD.

At 740, and in response to selecting a surface configuration, the base station 120 indicates the surface configuration to the coordinating UE. For instance, the base station 120 transmits an indication of an index that maps to an entry in a codebook as described with reference to FIG. 5.

At 745, the UE 111 selects a surface configuration for the APD. In some aspects, a coordinating UE (e.g., the UE 111) selcts the proposed surface configuration indicated by the base station at 740. Alternatively or additionally, the coordinating UE calculates signal- and/or link-quality measurements for intra-UECS communications or receives the signal- and/or link-quality measurements from the other UEs 110. The coordinating UE then selects the surface configuration based on the calculated and/or received measurements. At times, the coordinating UE estimates UE-locations of the other UEs 110 and selects a surface configuration based, at least in part, on the estimated UE-locations. In aspects, the coordinating UE analyzes the proposed surface configuration indicated at 740, calculates an angle-of-departure at the APD, and adjusts the proposed surface configuration based on a location of the coordinating UE relative to the base station 120. Thus, the coordinating UE can select the surface configuration using any combination of information (e.g., the proposed surface configuration, the calculated measurements, the received measurements, estimated UE-location information).

A coordinating UE sometimes selects the surface configuration based, at least in part, on expected transmission characteristics. As one example, the coordinating UE may select a first surface configuration favorable (e.g., a surface configuration that introduces less distortion to the wide-beam transmissions relative to other surface configurations) to wide-beam transmissions, such as when the participating UEs 110 are co-located, and the coordinating UE determines to use wide-beam transmissions to reach multiple UEs. As another example, the coordinating UE may select a second surface configuration favorable to narrow-beam transmissions.

Generally, the transactions 735, 740, and 745 correspond to a sub-diagram 750 in which the base station 120 and/or the coordinating UE 111 selects a surface configuration that configures a surface of the APD 180 for intra-UECS communications. In the sub-diagram 750, the base station 120 optionally provides a proposed surface configuration to the coordinating UE 111, and the coordinating UE 111 selects the surface configuration used to configure the surface of the APD 180. However, in alternative aspects, such as that described with reference to sub-diagram 815, the coordinating UE 111 provides a proposed surface configuration to the base station 120. The sub-diagram 750 can include alternative or additional transactions not illustrated for visual brevity.

At 755, the UE 111 directs the APD to apply the surface configuration selected at 745. To illustrate, the UE 111 transmits an indication of an index that maps to an entry in a codebook using an APD-control channel. In aspects, the UE 111 transmits the indication using apportioned access to the APD-control channel, such as the apportioned accessed selected at 705.

At 760, the UE 111 and the other UEs 110 exchange intra-UECS communications using the APD 180 (e.g., using the surface of the APD as described with reference to FIG. 4). In other words, the UE 111 and the other UEs 110 include the APD 180 in the intra-UECS communication path(s) by using the surface of the APD to reflect signals as further described. This can include the UEs exchanging the intra-UECS communications based on apportioned reflection-access and/or control-access. In some aspects, a coordinating UE (e.g., the UE 111) iteratively reconfigures the surface of the APD for the intra-UECS communications (not illustrated). For example, the coordinating UE configures the surface configuration of the APD at the start of each (periodic) time duration assigned to the UECS. As another example, the coordinating UE configures the surface of the APD with a first surface configuration for the duration of a first time slot assigned to a first UE in the UECS, configures the surface configuration of the APD with a second surface configuration for the duration of a second time-slot assigned to a second UE in the UECS, and so forth.

Generally, the transactions 755 and 760 correspond to a sub-diagram 765 in which the coordinating UE and the other UEs 110 of a UECS coordinate intra-UECS communications using the APD. As further described, these transactions can iteratively repeat. The sub-diagram 765 can include alternative or additional transactions not illustrated for visual brevity.

FIG. 8 depicts the signaling and control transaction diagram 800 in which a base station relays a surface configuration to an APD for a coordinating UE. Returning to the completion of the diagram 600 of FIG. 6, the diagram can proceed alternatively to option "B," which is described in FIG. 8. At 730, the base station 120, the UE 111, and the other UEs 110 communicate apportioned APD-access with one another, such as by using similar signaling and control transactions as described with reference to FIG. 7. To illustrate, the base station 120 indicates apportioned reflection-access assigned to the UECS 108 (e.g., UECS-apportioned APD-access) to a coordinating UE (e.g., the UE 111). Alternatively or additionally, the UE 111 further apportions the reflection-access (e.g., UE-apportioned APD-access) between the other UEs 110. Thus, the UE 111 communicates UE-apportioned APD-access or UECS-apportioned APD-access to the other UEs 110.

At 745, and in a manner similar to that described with reference to FIG. 7, the UE 111 optionally selects a surface configuration. In some aspects, the UE 111 selects the surface configuration without receiving a proposed surface configuration from the base station 120. To illustrate, in apportioning the access at 730, the base station 120 does not apportion control-access to the UE 111 and/or the UECS 108. Instead, the base station 120 determines to control the APD 180 on behalf of the UE 111 and/or the UECS 108 either as a relay and/or by selecting a surface configuration for the APD. Thus, to save air interface resources, the base station 120 can wait to determine and/or select a surface configuration, such as by waiting until receiving a surface configuration from the UE 111. Accordingly, in some aspects, the UE 111 selects a surface configuration, such as by using signal- and/or link-quality measurements of intra-UECS communications as described at 745, and, in response to selecting a surface configuration, at 805, indicates the surface configuration to the base station 120 instead of communicating the surface configuration to the APD 180 using an APD-control channel.

At 810, the base station 120 selects a surface configuration that configures the surface of the APD for intra-UECS communication purposes. In some aspects, the base station 120 relays the surface configuration received at 805 (without modification) to configure the surface of the APD 180. Alternatively or additionally, the base station 120 analyzes the (proposed) surface configuration received from the UE 111 at 805 and selects a second surface configuration based, at least in part, on the proposed surface configuration. The base station 120, for instance, analyzes the proposed surface configuration to calculate an angle-of-reflection at the surface of the APD and uses the angle-of-reflection in combination with signal- and/or link-quality parameters to select the second surface configuration. In some aspects, the base station 120 selects the surface configuration by analyzing signal- and/or link-quality measurements based on communications with one or more UEs participating in the UECS. Thus, the base station 120 can select the surface configuration using a proposed surface configuration from the coordinating UE and/or can select the surface configuration using signal- and/or link-quality measurements.

Generally, and similar to the sub-diagram 750 of FIG. 7, the transactions 745, 805, and 810 correspond to a sub-diagram 815 in which a base station 120 and/or a coordinating UE select a surface configuration that configures a surface of the APD 180 for intra-UECS communications, where the base station 120 configures the surface on behalf of the coordinating UE 111. The sub-diagram 815 can include alternative or additional transactions not illustrated for visual brevity.

At 820, the base station 120 directs the APD to apply the surface configuration for intra-UECS communications, such as by transmitting an indication of an index as further described. At 760, the coordinating UE 111 and the UEs 110 exchange intra-UECS communications using the APD with the surface configured by the base station 120, such as by using similar signaling and control transactions as described with reference to FIG. 7. In some aspects, the base station 120 iteratively configures and/or reconfigures the surface of the APD for the intra-UECS communications exchanged by the UECS 108 by repeating any of sub-diagrams 730, 815, and/or 825. For example, the base station 120 configures the surface of the APD with a first surface configuration for a first duration assigned to the UECS 108 (e.g., using an APD-fast-control channel) and reconfigures the surface configuration of the APD with a second surface configuration for a second time-duration assigned to the base station 120 and/or a second UECS (not illustrated).

Generally, the transactions 820 and 760 correspond to a sub-diagram 825 in which the UE 111 and the other UEs 110 of a UECS coordinate intra-UECS communications using the base station 120 to configure a surface of the APD (e.g., as a relay or as selected by the base station). These transactions can iteratively repeat as further described. The sub-diagram 825 can include alternative or additional transactions not illustrated for visual brevity.

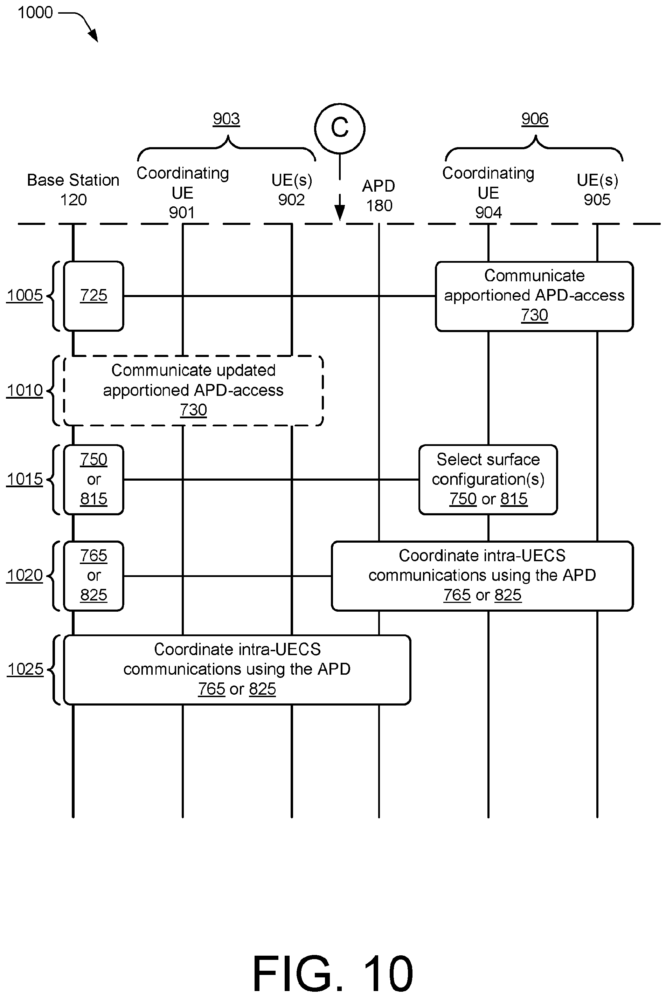

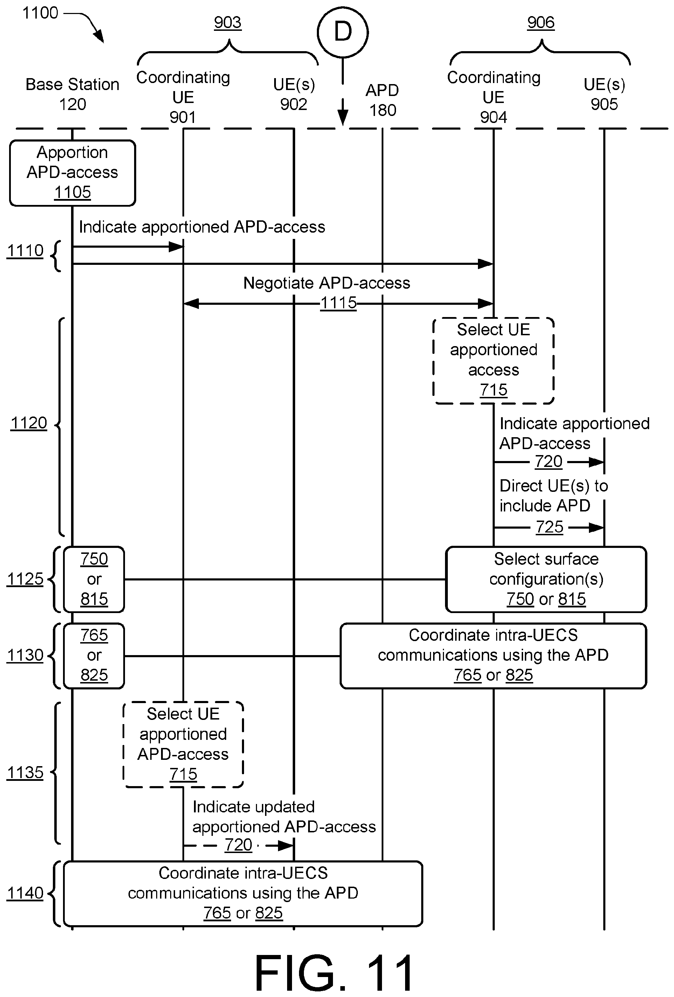

FIG. 9 depicts a second example of signaling and control transactions for intra-UECS communications via an APD using the signaling and control transaction diagram 900. The diagram 900 can lead to at least (c) additional signaling and control transactions as illustrated by FIG. 10, or (d) additional signaling and control transactions as illustrated by FIG. 11. The diagram 900 includes signaling and control transactions among the base station 120, a first coordinating UE 901 and one or more other UE(s) 902 (e.g., non-coordinating UEs) that form a first UECS 903, a second coordinating UE 904 and other UE(s) 905 (e.g., non-coordinating UEs) that form a second UECS 906, and the APD 180.

At 910, the base station 120, the UE 901, and the other UEs 902 establish a first UECS 903 using similar signaling and control transactions described by the sub-diagram 625 of FIG. 6, where the base station 120 selects the UE 901 as the coordinating UE of the UECS 903. In aspects, the UE 901 and the other UEs 902 transmit signal- and/or link-quality measurements to the base station 120, the base station 120 directs the UEs to form the first UECS 903, and the UECS 903 jointly transmits uplink communications to the base station 120 and/or jointly receives downlink communications from the base station 120. In aspects, as part of establishing the UECS 903, the base station 120 and the coordinating UE 901 exchange APD information.

At 915, the base station 120 and the first coordinating UE 901 prepare the UECS 903 to use an APD for intra-UECS communications using similar signaling and control transactions as described by the sub-diagram 645 of FIG. 6. In aspects, the coordinating UE 901 (optionally) indicates candidate APDs to the base station 120, the base station 120 selects an APD for the UECS to use in intra-UECS communication paths, and the base station 120 forwards APD information about the selected APD to the coordinating UE 901.

At 920, the base station, the second coordinating UE 904, and the other UEs 905 establish a second UECS 906 using similar signaling and control transactions as described by the sub-diagram 625 of FIG. 6. To illustrate, the base station 120 selects the UE 904 and the other UEs 905 to form the second UECS 906 based on analyzing signal-quality measurements, link-quality measurements, measurement reports, and so forth. In aspects, as part of establishing the UECS 906, the base station 120 and the coordinating UE 904 exchange APD information.

At 925, the base station 120 and the second coordinating UE 904 prepare the UECS 906 to use an APD for intra-UECS communications using similar signaling and control transactions as described by the sub-diagram 645 of FIG. 6. In the diagram 900, the base station 120 selects the same APD (e.g., the APD 180) for the second UECS 906 that was selected for the first UECS 903.

At 930, the first coordinating UE 901 requests APD-access to the APD 180 using similar signaling and control transactions as described by the sub-diagram 660 of FIG. 6. To illustrate, the first coordinating UE 901 analyzes link-quality measurements associated with intra-UECS communications and identifies that the link-quality measurements indicate a channel impairment. Based on identifying the channel impairment, the first coordinating UE 901 requests APD-access (e.g., reflection-access and/or control-access) to the APD 180.

At 935, the base station 120, the first coordinating UE 901, and the other UEs 902 perform multiple signaling and control transactions to incorporate the APD 180 into the intra-UECS communication path(s) used by the UECS 903. To illustrate, the base station 120, the coordinating UE 901, and/or the other UEs 902 communicate apportioned APD-access (e.g., to the APD 180) using similar signaling and control transactions as described by the sub-diagram 730 of FIG. 7. For instance, the base station 120 apportions reflection-access to the APD 180 for use by the UECS 903 and indicates and/or communicates a configuration that indicates an allocation of time-partitioned reflection access to the APD and/or indicates an allocation of configurable surface elements for the apportioned reflection-access to the first coordinating UE 901. Alternatively or additionally, the base station 120 apportions and communicates control-access, such as by communicating a configuration that indicates an allocation of the physical resources of an APD-control channel (e.g., time-partitioned resources, frequency-partitioned resources, coding-scheme partitioned resources).

At 935, to incorporate the APD 180 into the intra-UECS communication path(s), the base station 120 and the first coordinating UE 901 also select a surface configuration that configures the surface of the APD 180 for intra-UECS communications. In some aspects, the base station 120 and the first coordinating UE 901 select the surface configuration using similar signaling and control transactions as described by the sub-diagram 750 of FIG. 7, where the first coordinating UE 901 optionally receives a proposed surface configuration from the base station 120. Alternatively, base station 120 and the first coordinating UE 901 select the surface configuration using similar signaling and control transactions described by the sub-diagram 815 of FIG. 8, where the first coordinating UE 901 indicates a proposed surface configuration to the base station 120.

At 935, to incorporate the APD 180 into the intra-UECS communication path(s), the base station 120, the first coordinating UE 901, and the other UEs 902 also coordinate intra-UECS communications using the APD. This can include coordinating the intra-UECS communications using similar signaling and control transactions as described by the sub-diagram 765 of FIG. 7, where the first coordinating UE 901 controls the surface configuration of APD 180 by directly communicating with the APD over an APD-control channel. Alternatively, this can include coordinating the intra-UECS communications using similar signaling and control transactions described by the sub-diagram 825 of FIG. 8, where the base station 120 controls the surface configuration of APD 180 on behalf of the UECS 903.

At 940, the second coordinating UE 904 of the second UECS 906 requests APD-access to the APD 180 using similar signaling and control transactions described by the sub-diagram 660 of FIG. 6. For example, the second coordinating UE 904 identifies a channel impairment in the intra-UECS communications and requests access to the APD 180 from the base station 120. At this point, the diagram 900 can proceed to at least two alternative paths: option "C" (described in FIG. 10) or option "D" (described in FIG. 11).

FIG. 10 depicts a signaling and control transaction diagram 1000 in which a base station apportions APD-access between two UECSs. FIG. 11 depicts a signaling and control transaction diagram 1100 in which a base station indicates apportioned APD-access to two coordinating UEs of two UECSs, and the coordinating UEs negotiate with one another to further apportion the APD access (provided by the base station) between the two UECSs.

Continuing to option "C" in FIG. 10, at 1005, the base station 120, the second coordinating UE 904, and/or the UEs 905 communicate apportioned APD-access using similar signaling and control transactions as described by the sub-diagram 730 of FIG. 7. For example, the base station 120 selects configurations for apportioned reflection-access and/or control-access to the APD 180 and assigns the apportioned reflection- and/or control-access to the UECS 906.

At 1010, the base station 120, the first coordinating UE 901, and the UEs 902 optionally communicate updated apportioned APD-access using similar signaling and control transactions described by the sub-diagram 730 of FIG. 7. For example, based on a second coordinating UE requesting APD-access, the base station may reconfigure and/or re-apportion the APD-access assigned to the first UECS, such as when the second UECS 906 anticipates exchanging higher bandwidth communications relative to the first UECS 903 and/or the second UECS 906 has higher priority to the APD 180 than the first UECS 903. Accordingly, in response to reconfiguring and/or re-apportioning the APD-access assigned to the first UECS, the base station and the UEs included in the UECS 903 communicate the updated apportioned access.

At 1015, the base station 120 and the second coordinating UE 904 select a surface configuration that configures the surface of the APD 180 for intra-UECS communications exchanged by the UECS 906. This can include selecting the surface configuration using similar signaling and control transactions described by the sub-diagram 750 of FIG. 7, where the second coordinating UE 904 optionally receives a proposed surface configuration from the base station 120. Alternatively, this can include selecting the surface configuration using similar signaling and control transactions described by the sub-diagram 815 of FIG. 8, where the second coordinating UE 904 indicates a proposed surface configuration to the base station 120.

At 1020, the base station 120, the second coordinating UE 904, and the other UEs 905 coordinate intra-UECS communications using the APD 180. This can include coordinating the intra-UECS communications using similar signaling and control transactions described by the sub-diagram 765 of FIG. 7, where the second coordinating UE 904 controls the surface configuration of the APD 180 by directly communicating with the APD over an APD-control channel (e.g., using apportioned control-access). Alternatively, this can include coordinating the intra-UECS communications using similar signaling and control transactions described by the sub-diagram 825 of FIG. 8, where base station 120 controls the surface configuration of APD 180 on behalf of the UECS 906. Thus, the base station 120 optionally communicates surface configurations to the APD 180 as part of coordinating the intra-UECS communications.

At 1025, the base station 120, the first coordinating UE 901, and the UEs 902 coordinate intra-UECS communications using the APD 180 by including the APD 180 in intra-UECS communication path(s) as further described. This can include coordinating the intra-UECS communications using similar signaling and control transactions described by the sub-diagram 765 of FIG. 7, where the first coordinating UE 901 controls the surface configuration of the APD 180 by directly communicating with the APD over an APD-control channel (e.g., using apportioned control-access). Alternatively, this can include coordinating the intra-UECS communications using similar signaling and control transactions described by the sub-diagram 825 of FIG. 8, where base station 120 controls the surface configuration of APD 180 on behalf of the UECS 903. Thus, the base station 120 optionally communicates surface configurations to the APD 180 as part of coordinating the intra-UECS communications. At times, the base station 120, the first coordinating UE 901, and the UEs 902 use re-configured and/or re-apportioned APD-access optionally determined at 1010. Other times, the base station 120, the first coordinating UE 901, and the UEs 902 uses the configurations for apportioned access determined and/or selected at 935 of the diagram 900.

The signaling and control transactions described at 1020 and 1025 can be performed iteratively and/or contemporaneously (not illustrated). For instance, assume the base station 120 assigns a first subset of configurable-surface-elements (of the APD 180) to the UECS 903 and a second subset of configurable-surface-elements to the UECS 906. In aspects, and based on the reflection-access assigned by the base station, each UECS agrees to use their respective assigned subset of configurable-surface-elements and refrain from using other configurable-surface-elements. This allows the UECSs to access the APD contemporaneously with one another and avoid collisions and/or contentions. As another example, assume the base station 120 (a) controls the surface configuration of the APD 180 as described with reference to the diagram 800 and (b) apportions reflection-access to the APD 180 using periodic time-partitioning. Based on the periodic time-partitioning, the base station 120 iteratively configures the APD 180 with a first surface configuration for the first UECS 903 over a first time-duration and a second surface configuration for the second UECS 906 over a second time-duration.

FIG. 11 depicts a signaling and control transaction diagram 1100 in which a base station indicates apportioned APD-access to two coordinating UEs of two UECSs, and the coordinating UEs negotiate with one another to further apportion the APD access (provided by the base station) between the two UECSs. Returning to the completion of the diagram 900 of FIG. 9, the diagram can proceed alternatively to option "D," which is described in FIG. 11. Using similar signaling and control transactions as described at 705 of FIG. 7, at 1105, the base station 120 apportions ADP-access to the APD 180, where the base station selects and/or determines any combination of apportioned reflection-access and/or control-access to the APD 180 (e.g., configurations for apportioned APD-access). In aspects, the base station 120 selects and/or identifies a block of reflection-access and/or control-access for the UECS 903 and the UECS 906 to share. Thus, instead of selecting a first configuration and/or portion of APD-access for the UECS 903 and a second configuraiotn and/or portion of APD-access for the UECS 906, the base station 120 identifies an allocation of APD-access and assigns the allocation to both the UECS 903 the UECS 906. Accordingly, at 1110, the base station indicates the apportioned APD-access to the first coordinating UE 901 and/or the coordinating UE 904 (e.g., by communicating configurations that indicate the allocation(s)).

At 1115, the first coordinating UE 901 and the second coordinating UE 904 negotiate APD-access to the APD 180, such as by communicating with one another over a side link. To illustrate, assume the base station 120 apportions and assigns the entire surface of the APD 180 to both the UECS 903 and the UECS 906. In negotiating the APD-access, the first coordinating UE 901 and the second coordinating UE 904 agree to time-share the APD 180 by using time partitioning, where the coordinating UEs agree to use (and/or configure) the surface of the APD during different time durations. The time divisions do not have to be equal and may depend on the amount of data buffered for transmission by each UECS, the frequency bandwidth of the carrier signals, and other factors.

Alternatively or additionally, the coordinating UEs 901 and 904 apportion APD-access using configurable-surface-element partitioning, where the coordinating UEs agree to use (and/or configure) different subsets of configurable surface elements that form the RIS of the APD 180. For example, with reference to FIG. 5, the coordinating UEs apportion the configurable surface element 502 to the UECS 903 and the configurable surface element 506 to the UECS 906. This can include any type of configurable-surface-element partitioning, such as horizontal partitioning that groups elements in a same horizontal row, vertical partitioning that groups elements in a same vertical column, quadrant partitioning, and so forth. The configurable-surface-element partitions do not have to be equal and may depend on the amount of data buffered for transmission by each UECS, the operating area or beam area of each UECS, the frequency bandwidth of the carrier signals, each device's MIMO configurations, and other factors.

In some aspects, as part of negotiating APD-access to the APD, the coordinating UEs additionally apportion physical resources of an APD-control channel. To illustrate, the coordinating UE 901 and the coordinating UE 904 share the physical resources of an APD-control channel apportioned to the two UECSs by the base station 120. In aspects, the coordinating UEs 901 and 904 apportion the physical resources of a (shared) APD-control channel to avoid contentions, such as by assigning a first resource block of the APD-control channel to the coordinating UE 901 and a second resource block of the APD-control channel to the coordinating UE 904. Alternatively or additionally, the coordinating UEs 901 and 904 agree to assign a first control channel element (CCE) (e.g., resource element (RE), resource element group (REG)) to the first coordinating UE 901 and a second CCE to the second coordinating UE 904. As yet another example, the coordinating UEs 901 and 904 agree to assign a first time slot of the shared APD-control channel to the coordinating UE 901 and a second time-slot of the APD-control channel to the second coordinating UE 904. When sharing an APD-control channel, the coordinating UEs may include a UE and/or UECS identifier in their APD-control messages over the same physical APD-control channel.

At 1120, and with reference to FIG. 7, the UEs included in the UECS 906 communicate apportioned APD-access to the APD 180 with one another. To illustrate at 715, and in response to negotiating the APD-access at 1115, the coordinating UE 904 optionally apportions the APD-access by selecting configurations for UE-apportioned APD-access as further described. At 720, the coordinating UE 904 indicates the apportioned APD-access to the UEs 905, which can include UECS-apportioned APD-access or UE-apportioned APD-access. At 725, the coordinating UE 904 directs the UEs 905 to include the APD 180 in the intra-UECS communication paths. At times, the coordinating UE 904 implicitly directs the UEs 905 to include the APD 180 in the intra-UECS communication paths by indicating the apportioned APD-access at 720. Alternatively, or additionally, the coordinating UE 904 explicitly directs the UEs 905 to include the APD 180 in the intra-UECS communication paths as further described.

At 1125, the base station 120 and the second coordinating UE 904 select a surface configuration that configures the surface of the APD 180 for intra-UECS communications exchanged by the UECS 906. This can include selecting the surface configuration using similar signaling and control transactions as described by the sub-diagram 750 of FIG. 7, where the second coordinating UE 904 optionally receives a proposed surface configuration from the base station 120. Alternatively, this can include selecting the surface configuration using similar signaling and control transactions described by the sub-diagram 815 of FIG. 8, where the second coordinating UE 904 indicates a proposed surface configuration to the base station 120.

At 1130, the base station 120, the second coordinating UE 904, and the other UEs 905 coordinate intra-UECS communications using the APD 180. This can include coordinating the intra-UECS communications using similar signaling and control transactions described by the sub-diagram 765 of FIG. 7, where the second coordinating UE 904 controls the surface configuration of the APD 180 by directly communicating with the APD over an APD-control channel (e.g., using apportioned control-access). Alternatively, this can include coordinating the intra-UECS communications using similar signaling and control transactions as described by the sub-diagram 825 of FIG. 8, where base station 120 controls the surface configuration of APD 180 on behalf of the UECS 906. Thus, the base station 120 optionally communicates surface configurations to the APD 180 as part of coordinating the intra-UECS communications.

At 1135, the first coordinating UE 901 optionally selects one or more configurations for UE-apportioned APD-access as described at 715 of FIG. 7. For instance, the first coordinating UE 901 selects a configuration for UE-apportioned APD-access using the updated APD-access negotiated at 1115. At 1135, the first coordinating UE 901 also optionally indicates apportioned APD-access as described at 720 of FIG. 7. In some instances, in negotiating the APD-access at 1115, the coordinating UE 901 retains the APD-access assigned to the UECS 903 by the base station 120 at 935 of FIG. 9. In such instances, the first coordinating UE does not need to select and/or identify updated apportioning to the APD-access (e.g., updated apportioning configurations) or indicate updated apportioning of the APD-access at 1135. In other instances, such as when the UECS 903 receives updated APD-access based on the negotiating at 1115, the first coordinating UE 901 selects updated UE-apportioned APD-access and/or indicates updated apportioned APD access.

At 1140, the base station 120, the first coordinating UE 901, and the UEs 902 coordinate intra-UECS communications by including the APD 180 in intra-UECS communication path(s) as further described. At times, the base station 120, the first coordinating UE 901, and the UEs 902 use re-configured and/or re-apportioned APD-access negotiated at 1115. The signaling and control transactions described at 1130 and 1140 can be performed iteratively and/or contemporaneously (not illustrated), such as when each UECS (by way of the respective coordinating UE) agrees to use their respective assigned subset of configurable-surface-elements and or uses periodic time-partitioned access to the APD 180 as further described.

### Example Methods for Intra-UECS Communications via an APD

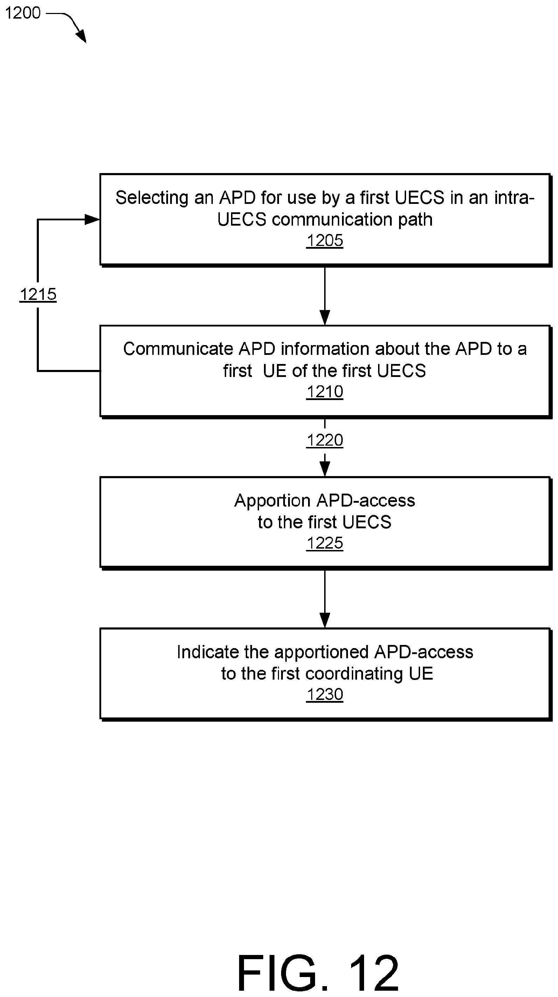

Example methods 1200 and 1300 are described with reference to FIGs. 12 and in accordance with one or more aspects of intra-UECS communications via an APD. FIG. 12 illustrates an example method 1200 used to perform aspects of intra-UECS communications, such as a base station that apportion access to an APD for use in intra-UECS communications. In some implementations, operations of the method 1200 are performed by the base station 120 as described with reference to any of FIGs. 1-11.

At 1205, a base station selects an APD for use by a first UECS in an intra-UECS communication path. The base station 120, as one example, receives a list of candidate APDs from the coordinating UE of the first UECS (e.g., the UE 111 of the UECS 108) as described at 630 of FIG. 6, and selects an APD from the list of candidate APDs as described at 635 of FIG. 6. As another example, the base station 120 selects the APD from a list of APDs in a coverage area.

At 1210, the base station communicates APD information about the APD to a first coordinating UE of the first UECS. To illustrate, the base station 120 indicates any combination of APD identification information, APD position information, APD control channel information, and/or surface-configuration codebooks to the UE 111 as described at 640 in FIG. 6. This can include indicating the APD information while forming the first UECS as described at 610 and/or in response to receiving a list of candidate APDs from the UE 111 as described at 630 of FIG. 6.

In some aspects, the method 1200 iteratively repeats at 1215 such that the base station identifies a new APD at 1205 for use by the first UECS and communicates new APD information at 1210. As one example, as the UE 111 moves to a new location and/or detects that the other UEs (e.g., UE 112, UE 113) in the UECS 108 move locations, the UE 111 identifies a new list of candidate APDs and indicates the new list of candidate APDs to the base station 120. The base station 120 then identifies a new APD from the new list of candidate APDs at 1205 and communicates new APD information at 1210.

Alternatively, the method 1200 proceeds at 1220. At 1225, the base station apportions APD-access to the first UECS. The base station 120, for example, apportions reflection-access and/or control-access to the APD 180 for the UECS 108 as described at 705 of FIG. 7 and/or the sub-diagram 730 of FIGs. 7-10. Alternatively or additionally, the base station 120 apportions a block of APD-access for the first UECS to share with a second UECS as described at 1105 of FIG. 11.

At 1230, the base station indicates the apportioned APD-access to the first coordinating UE of the first UECS. For example, the base station 120 indicates the apportioned access to the UE 111 as described at 710 of FIG. 7 and/or the sub-diagram 730 of FIGs. 7-10. Alternatively or additionally, the base station 120 indicates a block of APD-access for the first UECS to share with a second UECS as described at 1110 of FIG. 11.

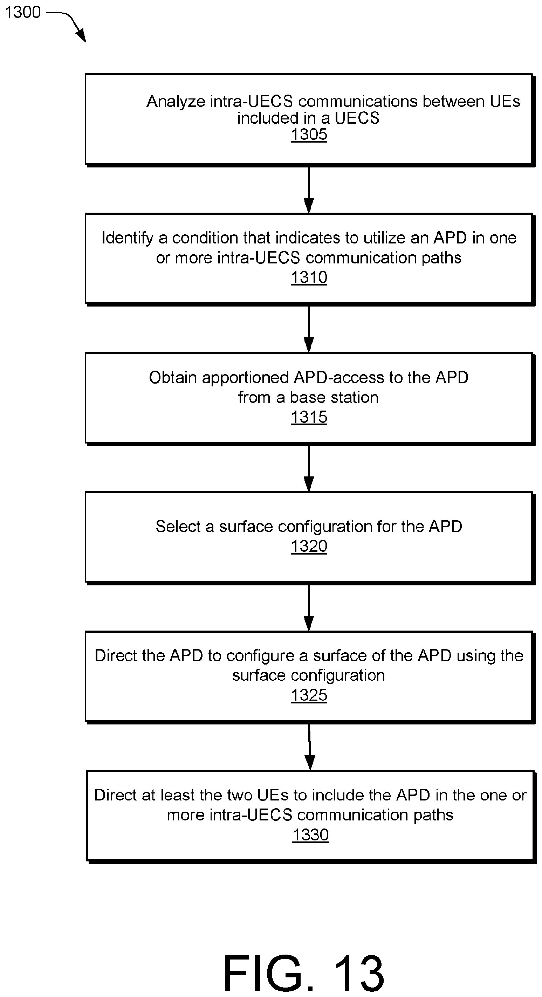

FIG. 13 illustrates an example method 1300 used to perform aspects of intra-UECS communications via an APD, such as a coordinating UE that manages APD for use in intra-UECS communications. In some implementations, operations of the method 1300 are performed by the UE 111, the UE 901, and/or the UE 904 as described with reference to any of FIGs. 1-11.

At 1305, a UE analyzes intra-UECS communications between user equipments, UEs, included in the UECS. For example, the coordinating UE 111 analyzes intra-UECS communications of the UECS 108 as described at 650 of FIG. 6 and/or the sub-diagram 660 as described in FIG. 6 and FIG. 9.

At 1310, and based on analyzing the intra-UECS communications, the UE identifies a condition that indicates to utilize an APD in one or more intra-UECS communication paths between at least two UEs included in the UECS. To illustrate, and as described at 650 of FIG. 6 and/or the sub-diagram 660 as described in FIG. 6 and FIG. 9, the UE 111, the UE 901, and/or the UE 904 identify a channel impairment that indicates use an APD in the intra-UECS communication paths (e.g., may be mitigated through the use of an APD in the intra-UECS communication paths). As another example, the UE 111 identifies that the UE 901 and/or the UE 904 have moved locations, where historical records indicate that a new UE-location has a history of channel impairments and/or has a history of APD-usage (e.g., other UEs at the UE-location have included an APD in a communication path). The at least two UEs that utilize the APD in their intra-UECS communication path(s) may be: a coordinating UE and a target UE; the coordinating UE and one or more non-target UEs; the target UE and one or more non-target UEs; the coordinating UE, the target UE and one or more non-target UEs; or two or more non-target UEs.

At 1315, the UE obtains apportioned APD-access to the APD from a base station. For example, the UE 111, the UE 901, and/or the UE 904 obtains reflection-access and/or control-access from the base station 120 as described at 710 of FIG. 7 and/or by the sub-diagram 730 in FIGs. 7-11.

At 1320, the UE selects a surface configuration for the APD based on the apportioned APD-access. The UE 111, the UE 901, and/or the UE 904, for instance, select a surface configuration for the APD 180 as described at 745 of FIG. 7 and/or by the sub-diagram 750 in FIGs. 7-11.

At 1325, the UE directs the APD to configure a surface of the APD using the surface configuration. In some aspects, and as described at 755 of FIG. 7 and in the sub-diagram 765 as illustrated in FIGs. 7-11, the UE 111, the UE 901, and/or the UE 904 direct the APD 180 to configure the surface by indicating the surface configuration directly to the APD 180 using an APD-control channel. In other aspects, and as described at 805 of FIG. 8, the UE 111 indirectly directs the APD 180 to configure the surface by indicating the surface configuration to the base station 120.

At 1330, the UE directs at least the two UEs to include the APD in the one or more intra-UECS communication paths. To illustrate, the UE 111, the UE 901, and/or the UE 904 direct the other UEs 110, the other UEs 902, and/or the other UEs 905 to incorporate the APD 180 in intra-UECS communication paths as described at 725 of FIG. 7 and in the sub-diagram 730 as illustrated in FIGs. 7-11. In aspects, the at least two UEs includes the coordinating UE (e.g., UE 111, the UE 901, the UE 904). In other words, the intra-UECS communication paths can include a communication path between a non-coordinating UE (included in the UECS) and a coordinating UE.

The order in which the method blocks of the method 1200 and 1300 are described are not intended to be construed as a limitation, and any number of the described method blocks can be skipped or combined in any order to implement a method or an alternative method. Generally, any of the components, modules, methods, and operations described herein can be implemented using software, firmware, hardware (e.g., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

The invention is defined by the appended claims.

## Claims

1. A method performed by a base station (120) for using an adaptive phase-changing device, APD (180), in an intra-user equipment-coordination set, intra-UECS, communication path (133, 134, 135), the APD (180) being an apparatus that includes a reconfigurable intelligent surface, RIS (322), for use in a communication path between user equipments, UEs, in a user equipment-coordination set, UECS, and/or between the base station and one or more UEs in the UECS, the method comprising:
selecting (1205) an APD (180) for use by the UECS (108), in one or more intra-UECS communication paths (133, 134, 135), the UECS comprising multiple UEs configured to perform joint transmission and/or joint reception of communications for a target UE (110);
communicating (1210) APD (180) information about the APD to a coordinating user equipment, UE (111), of the UECS (108);
apportioning (1225) APD-access to the APD (180) for the UECS (108); and
indicating (1230) the apportioned APD-access to the coordinating UE (111) of the UECS (108).

2. The method as recited in claim 1, wherein apportioning (1225) the APD-access further comprises at least one of:
selecting a first configuration for apportioned control-access to the APD (180); or
selecting a second configuration for apportioned reflection-access to the APD (180).

3. The method as recited in claim 2, wherein apportioning (1225) the APD-access further comprises at least one of:
apportioning, as the first configuration, a first subset of physical resources of an APD-control channel to the UECS (108); or
apportioning, as the second configuration, reflection-access to the APD (180) using at least one of:
time-partitioning; or
configurable-surface-element (324) partitioning.

4. The method as recited in claim 3, wherein apportioning (1225) the reflection-access further comprises:
identifying that the APD (180) supports surface sharing through configurable-surface-element (324) partitioning; and
based on identifying that the APD (180) supports surface sharing, allocating a subset of configurable surface elements (324) to the UECS (108).

5. The method as recited in any one of claims 1 to 4, further comprising:
selecting a surface configuration for the APD (180) based on downlink or uplink communications with the UECS (108); and
communicating the surface configuration to the coordinating UE (111) of the UECS (108).

6. The method as recited in any one of claims 1 to 4, further comprising:
receiving, from the coordinating UE (111) of the UECS (108), a surface configuration determined by the coordinating UE (111); and
directing the APD (180) to update a surface of the APD using the surface configuration determined by the coordinating UE (111).

7. The method as recited in claim 6, wherein directing the APD (180) to update the surface of the APD further comprises:
directing the APD (180) to update the surface of the APD based on the apportioned APD-access.

8. The method as recited in any one of claims 1 to 7, wherein selecting the APD (180) for use by the UECS (108) further comprises:
receiving, from the coordinating UE (111), a request to use the APD (180) in the one or more intra-UECS communication paths (133, 134, 135).

9. The method as recited in claim 1 or claim 2, wherein the coordinating UE (111) is a first coordinating UE (901), the UECS (108) is a first UECS (903), and the method further comprises:
communicating the apportioned APD-access to a second coordinating UE (904) of a second UECS (906); and
directing the first coordinating UE (901) to negotiate with the second coordinating UE (904) to share the apportioned APD-access between the first UECS (903) and the second UECS (906).

10. A method performed by a coordinating user equipment (111), UE, in a user equipment-coordination set, UECS (108), for using an adaptive phase-changing device, APD, in an intra-UECS communication path (133, 134, 135), the APD (180) being an apparatus that includes a reconfigurable intelligent surface, RIS (322) for use in a communication path between user equipments, UEs, in the UECS, and/or between the base station and one or more UEs in the UECS, the method comprising:
identifying (1310) a condition that indicates to utilize an APD (180) in one or more intra-UECS communication paths (133, 134, 135) between at least two UEs (110) included in the UECS (108), the UECS comprising multiple UEs configured to perform joint transmission and/or joint reception of communications for a target UE;
obtaining (1315) apportioned APD-access to the APD (180) from a base station (120);
selecting (1320) a surface configuration for the APD (180) based on the apportioned APD-access;
directing (1325) the APD (180) to configure a surface of the APD using the surface configuration; and
directing (1330) at least the two UEs (110) to include the APD (180) in the one or more intra-UECS communication paths (133, 134, 135).

11. The method as recited in claim 10, wherein obtaining (1315) the apportioned APD-access to the APD (180) further comprises:
sending, to the base station (120), a request to access the APD (180); and
obtaining at least one of:
a first configuration for apportioned control-access to the APD (180); or
a second configuration for apportioned reflection-access to the APD (180).

12. The method as recited in claim 11, wherein obtaining (1315) the apportioned APD-access to the APD (180) comprises at least one of:
receiving, as the first configuration, a first allocation of apportioned physical resources of an APD-control channel; or
receiving, as the second configuration, a second allocation of at least one of:
time-partitioned reflection-access to the APD (180); or
configurable-surface-element-partitioned reflection-access to the APD (180).

13. The method as recited in any one of claims 10 to 12, wherein directing the APD (180) to configure the surface of the APD using the surface configuration comprises:
communicating the surface configuration to the APD (180) using an APD-control channel; or
communicating the surface configuration to the APD (180) through the base station (120).

14. The method as recited in any one of claims 10 to 13, wherein identifying the condition that indicates to utilize the APD (180) in the one or more intra-UECS communication paths (133, 134, 135) further comprises at least one of:
(i) analyzing intra-UECS communications between the at least two UEs (110) included in the UECS (108); and
identifying at least one channel impairment between the UEs (110) included in the UECS (108); or
(ii) receiving, from a non-coordinating UE (110) participating in the UECS (108), an estimated UE-location of the non-coordinating UE (110) participating in the UECS (108); and
identifying that the estimated UE-location is associated with APD-usage.

15. An apparatus comprising:
a processor; and
computer-readable storage media comprising instructions that, responsive to execution by the processor, direct the apparatus to perform a method as recited in any one of claims 1 to 14.

## Patentansprüche

1. Verfahren, das von einer Basisstation (120) zur Verwendung einer adaptiven phasenverändernden Vorrichtung, APD (adaptive phase-changing device) (180), in einem Intra-Benutzerausrüstungskoordinationssatz-, Intra-UECS- (intra-user equipment-coordination set), Kommunikationspfad (133, 134, 135) durchgeführt wird, wobei die APD (180) eine Vorrichtung ist, die eine rekonfigurierbare intelligente Oberfläche, RIS (reconfigurable intelligent surface) (322), zur Verwendung in einem Kommunikationspfad zwischen Benutzerausrüstungen, UEs (user equipments), in einem Benutzerausrüstungskoordinationssatz, UECS, und/oder zwischen der Basisstation und einer oder mehreren UEs in dem UECS beinhaltet, wobei das Verfahren Folgendes umfasst:
Auswählen (1205) einer APD (180) zur Verwendung durch den UECS (108) in einem oder mehreren Intra-UECS-Kommunikationspfaden (133, 134, 135), wobei der UECS mehrere UEs umfasst, die dazu konfiguriert sind, eine gemeinsame Übertragung und/oder einen gemeinsamen Empfang von Kommunikationen für eine Ziel-UE (110) durchzuführen;
Kommunizieren (1210) von APD (180)-Informationen über die APD an eine koordinierende Benutzerausrüstung, UE (111), des UECS (108);
Zuteilen (1225) von APD-Zugriff auf die APD (180) für den UECS (108); und
Angeben (1230) des zugeteilten APD-Zugriffs an die koordinierende UE (111) des UECS (108).

2. Verfahren nach Anspruch 1, wobei das Zuteilen (1225) des APD-Zugriffs ferner mindestens eines der Folgenden umfasst:
Auswählen einer ersten Konfiguration für einen zugeteilten Steuerzugriff auf die APD (180); oder
Auswählen einer zweiten Konfiguration für einen zugeteilten Reflexionszugriff auf die APD (180).

3. Verfahren nach Anspruch 2, wobei das Zuteilen (1225) des APD-Zugriffs ferner mindestens eines der Folgenden umfasst:
Zuteilen, als die erste Konfiguration, einer ersten Teilmenge von physikalischen Ressourcen eines APD-Steuerkanals an den UECS (108); oder
Zuteilen, als die zweite Konfiguration, von Reflexionszugriff auf die APD (180) unter Verwendung von mindestens einem von:
Zeitpartitionierung; oder
Partitionierung von konfigurierbaren Oberflächenelementen (324).

4. Verfahren nach Anspruch 3, wobei das Zuteilen (1225) des Reflexionszugriffs ferner Folgendes umfasst:
Identifizieren, dass die APD (180) eine gemeinsame Oberflächennutzung durch Partitionierung von konfigurierbaren Oberflächenelementen (324) unterstützt; und
basierend auf dem Identifizieren, dass die APD (180) die gemeinsame Oberflächennutzung unterstützt, Zuweisen einer Teilmenge von konfigurierbaren Oberflächenelementen (324) an den UECS (108).

5. Verfahren nach einem der Ansprüche 1 bis 4, ferner umfassend:
Auswählen einer Oberflächenkonfiguration für die APD (180) basierend auf Downlink- oder Uplink-Kommunikationen mit dem UECS (108); und
Kommunizieren der Oberflächenkonfiguration an die koordinierende UE (111) des UECS (108).

6. Verfahren nach einem der Ansprüche 1 bis 4, ferner umfassend:
Empfangen, von der koordinierenden UE (111) des UECS (108), einer von der koordinierenden UE (111) bestimmten Oberflächenkonfiguration; und
Anweisen der APD (180), eine Oberfläche der APD unter Verwendung der von der koordinierenden UE (111) bestimmten Oberflächenkonfiguration zu aktualisieren.

7. Verfahren nach Anspruch 6, wobei das Anweisen der APD (180), die Oberfläche der APD zu aktualisieren, ferner Folgendes umfasst:
Anweisen der APD (180), die Oberfläche der APD basierend auf dem zugeteilten APD-Zugriff zu aktualisieren.

8. Verfahren nach einem der Ansprüche 1 bis 7, wobei das Auswählen der APD (180) zur Verwendung durch den UECS (108) ferner Folgendes umfasst:
Empfangen, von der koordinierenden UE (111), einer Anforderung zur Verwendung der APD (180) in dem einen oder den mehreren Intra-UECS-Kommunikationspfaden (133, 134, 135).

9. Verfahren nach Anspruch 1 oder Anspruch 2, wobei die koordinierende UE (111) eine erste koordinierende UE (901) ist, der UECS (108) ein erster UECS (903) ist, und das Verfahren ferner Folgendes umfasst:
Kommunizieren des zugeteilten APD-Zugriffs an eine zweite koordinierende UE (904) eines zweiten UECS (906); und
Anweisen der ersten koordinierenden UE (901), mit der zweiten koordinierenden UE (904) zu verhandeln, um den zugeteilten APD-Zugriff zwischen dem ersten UECS (903) und dem zweiten UECS (906) zu teilen.

10. Verfahren, das von einer koordinierenden Benutzerausrüstung (111), UE, in einem Benutzerausrüstungskoordinationssatz, UECS (108), zur Verwendung einer adaptiven phasenverändernden Vorrichtung, APD, in einem Intra-UECS-Kommunikationspfad (133, 134, 135) durchgeführt wird, wobei die APD (180) eine Vorrichtung ist, die eine rekonfigurierbare intelligente Oberfläche, RIS (322), zur Verwendung in einem Kommunikationspfad zwischen Benutzerausrüstungen, UEs, in dem UECS und/oder zwischen der Basisstation und einer oder mehreren UEs in dem UECS beinhaltet, wobei das Verfahren Folgendes umfasst:
Identifizieren (1310) einer Bedingung, die angibt, eine APD (180) in einem oder mehreren Intra-UECS-Kommunikationspfaden (133, 134, 135) zwischen mindestens zwei in dem UECS (108) enthaltenen UEs (110) zu nutzen, wobei der UECS mehrere UEs umfasst, die dazu konfiguriert sind, eine gemeinsame Übertragung und/oder einen gemeinsamen Empfang von Kommunikationen für eine Ziel-UE durchzuführen;
Erhalten (1315) von zugeteiltem APD-Zugriff auf die APD (180) von einer Basisstation (120);
Auswählen (1320) einer Oberflächenkonfiguration für die APD (180) basierend auf dem zugeteilten APD-Zugriff;
Anweisen (1325) der APD (180), eine Oberfläche der APD unter Verwendung der Oberflächenkonfiguration zu konfigurieren; und
Anweisen (1330) von mindestens den zwei UEs (110), die APD (180) in den einen oder die mehreren Intra-UECS-Kommunikationspfade (133, 134, 135) einzubeziehen.

11. Verfahren nach Anspruch 10, wobei das Erhalten (1315) des zugeteilten APD-Zugriffs auf die APD (180) ferner Folgendes umfasst:
Senden, an die Basisstation (120), einer Anforderung zum Zugreifen auf die APD (180); und
Erhalten von mindestens einem von:
einer ersten Konfiguration für einen zugeteilten Steuerzugriff auf die APD (180); oder
einer zweiten Konfiguration für einen zugeteilten Reflexionszugriff auf die APD (180).

12. Verfahren nach Anspruch 11, wobei das Erhalten (1315) des zugeteilten APD-Zugriffs auf die APD (180) mindestens eines der Folgenden umfasst:
Empfangen, als die erste Konfiguration, einer ersten Zuweisung von zugeteilten physikalischen Ressourcen eines APD-Steuerkanals; oder
Empfangen, als die zweite Konfiguration, einer zweiten Zuweisung von mindestens einem von:
zeitpartitioniertem Reflexionszugriff auf die APD (180); oder
Reflexionszugriff mit Partitionierung von konfigurierbaren Oberflächenelementen auf die APD (180).

13. Verfahren nach einem der Ansprüche 10 bis 12, wobei das Anweisen der APD (180), die Oberfläche der APD unter Verwendung der Oberflächenkonfiguration zu konfigurieren, Folgendes umfasst:
Kommunizieren der Oberflächenkonfiguration an die APD (180) unter Verwendung eines APD-Steuerkanals; oder
Kommunizieren der Oberflächenkonfiguration an die APD (180) durch die Basisstation (120).

14. Verfahren nach einem der Ansprüche 10 bis 13, wobei das Identifizieren der Bedingung, die angibt, die APD (180) in dem einen oder den mehreren Intra-UECS-Kommunikationspfaden (133, 134, 135) zu nutzen, ferner mindestens eines der Folgenden umfasst:
(i) Analysieren von Intra-UECS-Kommunikationen zwischen den mindestens zwei UEs (110), die in dem UECS (108) enthalten sind; und
Identifizieren mindestens einer Kanalbeeinträchtigung zwischen den UEs (110), die in dem UECS (108) enthalten sind; oder
(ii) Empfangen, von einer nicht koordinierenden UE (110), die an dem UECS (108) teilnimmt, eines geschätzten UE-Standorts der nicht koordinierenden UE (110), die an dem UECS (108) teilnimmt; und
Identifizieren, dass der geschätzte UE-Standort mit einer APD-Nutzung assoziiert ist.

15. Vorrichtung, umfassend:
einen Prozessor; und
computerlesbare Speichermedien, die Anweisungen umfassen, die, als Reaktion auf eine Ausführung durch den Prozessor, die Vorrichtung anweisen, ein Verfahren nach einem der Ansprüche 1 bis 14 durchzuführen.

## Revendications

1. Procédé réalisé par une station de base (120) pour utiliser un dispositif à changement de phase adaptatif, APD (180) dans un chemin de communication d'ensemble de coordination intra-équipements utilisateurs, intra-UECS, (133, 134, 135), l'APD (180) étant un appareil comportant une surface intelligente reconfigurable, RIS (322), destiné à être utilisé dans un chemin de communication entre des équipements utilisateurs, UE, au sein d'un ensemble de coordination d'équipements utilisateurs, UECS, et/ou entre la station de base et un ou plusieurs UE de l'UECS, le procédé comprenant :
la sélection (1205) d'un APD (180) à utiliser par l'UECS (108), dans un ou plusieurs chemins de communication intra-UECS (133, 134, 135), l'UECS comprenant plusieurs UE configurés pour réaliser une transmission conjointe et/ou une réception conjointe de communications pour un UE cible (110) ;
la communication (1210) d'informations APD (180) sur l'APD à un équipement utilisateur de coordination, UE (111), de l'UECS (108) ;
la répartition (1225) de l'accès APD à l'APD (180) pour l'UECS (108) ; et
l'indication (1230) de l'accès APD réparti à l'UE de coordination (111) de l'UECS (108).

2. Procédé selon la revendication 1, dans lequel la répartition (1225) de l'accès APD comprend également au moins l'une :
de la sélection d'une première configuration pour la commande d'accès répartie à l'APD (180) ; ou
de la sélection d'une seconde configuration pour un d'accès réfléchi réparti à l'APD (180).

3. Procédé selon la revendication 2, dans lequel la répartition (1225) de l'accès APD comprend également au moins l'une :
de la répartition, en tant que première configuration, d'un premier sous-ensemble de ressources physiques d'un canal de commande APD à l'UECS (108) ; ou
de la répartition, en tant que seconde configuration, de l'accès par réflexion à l'APD (180) à l'aide d'au moins l'une :
de la répartition par temps ; ou
de la répartition d'élément de surface configurable (324).

4. Procédé selon la revendication 3, dans lequel la répartition (1225) de l'accès par réflexion comprend également :
l'identification que l'APD (180) prend en charge le partage de surface à travers la répartition par éléments de surface configurables (324) ; et
sur la base de l'identification que l'APD (180) prend en charge le partage de surface, l'attribution d'un sous-ensemble d'éléments de surface configurables (324) à l'UECS (108).

5. Procédé selon l'une quelconque des revendications 1 à 4, comprenant également :
la sélection d'une configuration de surface pour l'APD (180) sur la base des communications en liaison descendante ou en liaison montante avec l'UECS (108) ; et
la communication de la configuration de surface à l'UE de coordination (111) de l'UECS (108).

6. Procédé selon l'une quelconque des revendications 1 à 4, comprenant également :
la réception, à partir de l'UE de coordination (111) de l'UECS (108), d'une configuration de surface déterminée par l'UE de coordination (111) ; et
le fait d'ordonner à l'APD (180) de mettre à jour une surface de l'APD à l'aide de la configuration de surface déterminée par l'UE de coordination (111).

7. Procédé selon la revendication 6, dans lequel le fait d'ordonner à l'APD (180) de mettre à jour la surface de l'APD comprend également :
le fait d'ordonner à l'APD (180) de mettre à jour la surface de l'APD sur la base de l'accès APD réparti.

8. Procédé selon l'une quelconque des revendications 1 à 7, dans lequel la sélection de l'APD (180) pour utilisation par l'UECS (108) comprend également :
la réception, à partir de l'UE de coordination (111), d'une demande d'utilisation de l'APD (180) dans les un ou plusieurs chemins de communication intra-UECS (133, 134, 135).

9. Procédé selon la revendication 1 ou la revendication 2, dans lequel l'UE de coordination (111) est un premier UE de coordination (901), l'UECS (108) est un premier UECS (903), et le procédé comprend également :
la communication de l'accès APD réparti à un second UE de coordination (904) d'un second UECS (906) ; et
le fait d'ordonner au premier UE de coordination (901) de négocier avec le second UE de coordination (904) pour partager l'accès APD réparti entre le premier UECS (903) et le second UECS (906).

10. Procédé réalisé par un équipement utilisateur de coordination (111), UE, dans un ensemble de coordination intra-équipements utilisateurs, UECS (108), destiné à utiliser un dispositif à changement de phase adaptatif, APD, dans un chemin de communication intra-UECS (133, 134, 135), l'APD (180) étant un appareil qui comporte une surface intelligente reconfigurable, RIS (322), destiné à être utilisé dans un chemin de communication entre les équipements utilisateurs, UE, dans l'UECS, et/ou entre la station de base et un ou plusieurs UE dans l'UECS, le procédé comprenant :
l'identification (1310) d'une condition qui indique d'utiliser un APD (180) dans un ou plusieurs chemins de communication intra-UECS (133, 134, 135) entre au moins deux UE (110) inclus dans l'UECS (108), l'UECS comprenant plusieurs UE configurés pour réaliser une transmission conjointe et/ou une réception conjointe de communications pour un UE cible ;
l'obtention (1315) de l'accès APD réparti à l'APD (180) à partir d'une station de base (120) ;
la sélection (1320) d'une configuration de surface pour l'APD (180) sur la base de l'accès APD réparti ;
le fait d'ordonner (1325) à l'APD (180) de configurer une surface de l'APD à l'aide de la configuration de surface ; et
le fait d'ordonner (1330) aux au moins deux UE (110) d'inclure l'APD (180) dans les un ou plusieurs chemins de communication intra-UECS (133, 134, 135).

11. Procédé selon la revendication 10, dans lequel l'obtention (1315) de l'accès APD réparti à l'APD (180) comprend également :
l'envoi, à la station de base (120), d'une demande d'accès à l'APD (180) ; et
l'obtention d'au moins l'une :
d'une première configuration pour la commande d'accès répartie à l'APD (180) ; ou
d'une seconde configuration pour un d'accès réfléchi réparti à l'APD (180).

12. Procédé selon la revendication 11, dans lequel l'obtention (1315) de l'accès APD réparti (180) comprend au moins l'une :
de la réception, en tant que première configuration, d'une première attribution de ressources physiques réparties d'un canal de commande APD ; ou
de la réception, en tant que seconde configuration, d'une seconde attribution d'au moins l'un :
d'un accès par réflexion partitionné dans le temps à l'APD (180) ; ou
d'un accès par réflexion partitionné par élément de surface configurable à l'APD (180).

13. Procédé selon l'une quelconque des revendications 10 à 12, dans lequel le fait d'ordonner à l'APD (180) de configurer la surface de l'APD à l'aide de la configuration de surface comprend :
la communication de la configuration de surface à l'APD (180) à l'aide d'un canal de commande APD ; ou
la communication de la configuration de surface à l'APD (180) par le biais de la station de base (120).

14. Procédé selon l'une quelconque des revendications 10 à 13, dans lequel l'identification de la condition qui indique d'utiliser l'APD (180) dans les un ou plusieurs chemins de communication intra-UECS (133, 134, 135) comprend également au moins l'une :
(i) de l'analyse des communications intra-UECS entre les au moins deux UE (110) inclus dans l'UECS (108) ; et
de l'identification d'au moins une altération de canal entre les UE (110) inclus dans l'UECS (108) ; ou
(ii) de la réception, à partir d'un UE de non coordination (110) participant à l'UECS (108), d'un emplacement estimé de l'UE de l'UE de non coordination (110) participant à l'UECS (108) ; et
de l'identification que l'emplacement estimé de l'UE est associée à l'utilisation de l'APD.

15. Appareil comprenant :
un processeur ; et
un support de stockage lisible par ordinateur comprenant des instructions qui, en réponse à l'exécution par le processeur, ordonnent à l'appareil de réaliser un procédé selon l'une quelconque des revendications 1 à 14.
